(19) Europäisches Patentamt
European Patent Office
Office européen des brevets

(11) EP 2 982 108 B1

(12) **EUROPEAN PATENT SPECIFICATION**

(45) Date of publication and mention
of the grant of the patent:
**06.02.2019 Bulletin 2019/06**

(51) Int Cl.:
*H04N 19/103* (2014.01)   *H04N 19/159* (2014.01)
*H04N 19/61* (2014.01)   *H04N 19/105* (2014.01)
*H04N 19/176* (2014.01)   *H04N 19/11* (2014.01)
*H04N 19/136* (2014.01)   *H04N 19/186* (2014.01)

(21) Application number: **14780313.4**

(22) Date of filing: **04.04.2014**

(86) International application number:
**PCT/AU2014/000367**

(87) International publication number:
**WO 2014/161043 (09.10.2014 Gazette 2014/41)**

(54) **METHOD, APPARATUS AND SYSTEM FOR GENERATIING INTRA- PREDICTED SAMPLES**

VERFAHREN, VORRICHTUNG UND SYSTEM ZUM ERZEUGEN VON INTRA-PRÄDIZIERTEN ABTASTWERTEN

PROCÉDÉ, APPAREIL ET SYSTÈME DESTINÉS À GÉNÉRER DES ÉCHANTILLONS INTRA-PRÉDITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2013 AU 2013202653**

(43) Date of publication of application:
**10.02.2016 Bulletin 2016/06**

(73) Proprietor: **Canon Kabushiki Kaisha Tokyo 146-8501 (JP)**

(72) Inventors:
• **ROSEWARNE, Christopher James
  Concord West, NSW 2138 (AU)**
• **KOLESNIKOV, Volodymyr
  Dee Why, NSW 2099 (AU)**

(74) Representative: **Hitching, Peter Matthew et al
Canon Europe Ltd
European Patent Department
3 The Square
Stockley Park
Uxbridge Middlesex UB11 1ET (GB)**

(56) References cited:
**WO-A1-2012/176406     GB-A- 2 501 554**

• **FLYNN D ET AL: "HEVC Range Extensions Draft 2", 12. JCT-VC MEETING; 103. MPEG MEETING; 14-1-2013 - 23-1-2013; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-L1005, 25 February 2013 (2013-02-25), XP030113950,**
• **BROSS B. ET AL.: 'High Efficiency Video Coding (HEVC) text specification draft 8' JOINT COLLABORATIVE TEAM ON VIDEO CODING (JCT-VC) OF ITU-T SG 16 WP3 AND ISO/IEC JTC1/SC29/WG11; 10TH MEETING 11 July 2012 - 20 July 2012, STOCKHOLM, SE, XP055093210 Retrieved from the Internet: <URL:http://phenix.it-sudparis.eu/jet/doc_end_user/current_document.php?id=6465> [retrieved on 2014-05-14]**

**Description**

TECHNICAL FIELD

The present invention relates generally to digital video signal processing and, in particular, to a method, apparatus and system for generating intra-predicted samples for a video frame of video data. The present invention also relates to a computer program product including a computer readable medium having recorded thereon a computer program for generating intra-predicted samples for a video frame of video data.

BACKGROUND

Many applications for video coding currently exist, including applications for transmission and storage of video data. Many video coding standards have also been developed and others are currently in development. Recent developments in video coding standardisation have led to the formation of a group called the "Joint Collaborative Team on Video Coding" (JCT-VC). The Joint Collaborative Team on Video Coding (JCT-VC) includes members of Study Group 16, Question 6 (SG16/Q6) of the Telecommunication Standardisation Sector (ITU-T) of the International Telecommunication Union (ITU), known as the Video Coding Experts Group (VCEG), and members of the International Organisations for Standardisation / International Electrotechnical Commission Joint Technical Committee 1 / Subcommittee 29 / Working Group 11 (ISO/IEC JTC1/SC29/WG11), also known as the Moving Picture Experts Group (MPEG).

The Joint Collaborative Team on Video Coding (JCT-VC) has the goal of producing a new video coding standard to significantly outperform a presently existing video coding standard, known as "H.264/MPEG-4 AVC". The performance if a video coding standard is measured in multiple ways. A measure of the complexity of the algorithms present in or proposed for a video coding standard is used to estimate the incremental cost or saving of introducing a particular algorithm into the video coding standard. One simple measure of complexity is the run-time of a software implementation of the video coding standard. A measure of the ability of an implementation of a video coding standard to compactly represent uncompressed video data is known as the 'coding efficiency'. Implementations of video coding standards typically introduce distortion into the decompressed video data. This is known as 'lossy' compression and enables higher coding efficiency to be achieve. As a result, the measure of coding efficiency must consider both a measure of distortion (e.g. PSNR) versus a measure of bit-rate for the compressed video data (the 'bitstream'). The H.264/MPEG-4 AVC standard is itself a large improvement on previous video coding standards, such as MPEG-4 and ITU-T H.263. The new video coding standard under development has been named "high efficiency video coding (HEVC)". Further development of high efficiency video coding (HEVC) is directed towards introducing support of different representations of chroma information present in video data, known as 'chroma formats'. The Joint Collaborative Team on Video Coding (JCT-VC) is also considering implementation challenges arising from technology proposed for high efficiency video coding (HEVC) that create difficulties when scaling implementations of the standard to operate at high resolutions in real-time or high frame rates. The complexity of algorithms present in high efficiency video coding (HEVC) affects implementations, for example, the circuit size of hardware implementations.

One aspect of the coding efficiency achievable with a particular video coding standard is the characteristics of available prediction methods. For video coding standards intended for compression sequences of two-dimensional video frames, there are two types of prediction: intra-prediction and inter-prediction. Intra-prediction methods allow content of one part of a video frame to be predicted from other parts of the same video frame. Intra-prediction methods typically produce a block having a directional texture, with an intra-prediction mode specifying the direction of the texture and neighbouring samples within a frame used as a basis to produce the texture. Inter-prediction methods allow the content of a block within a video frame to be predicted from blocks in previous video frames. The previous video frames may be referred to as 'reference frames'. The first video frame within a sequence of video frames typically uses intra-prediction for all blocks within the frame, as no prior frame is available for reference. Subsequent video frames may use one or more previous video frames from which to predict blocks. To achieve the highest coding efficiency, the prediction method that produces a predicted block that is closest to the original video data is typically used. The remaining difference between the predicted block and the original video data is known as the 'residue'. A lossy representation of the residue, known as the 'residual' may be stored in the bitstream. The amount of lossiness in the residual affects the distortion of video data decoded from the bitstream compared to the original video data and the size of the bitstream.

The 'chroma formats', used to represent video data, specify the sample aspect ratio between a luma and multiple chroma channels of the video data. The aspect ratio implies a fixed relationship between collocated block sizes for luma and chroma for each chroma format. The fixed relationships also affect the available transform sizes used for the luma channel and chroma channels of a collocated block. When video data is represented using a "4:2:2" chroma format, a non-square relationship exists between the luma samples and the chroma samples.

One consequence of the non-square block size used in the chroma channels for a 4:2:2 chroma format is that the directional texture of the intra-prediction operation is distorted in a chroma channel, compared to the luma channel.

The distortion reduces the accuracy of the predicted block for a chroma channel. To compensate for the distortion, an increase in the size of the residual for a chroma channel is required. The increase results in an undesirable reduction in the coding efficiency achieved by implementations of the video coding standard.

Flynn D et al "HEVC Range Extensions Draft 2", 12. JCT-VC Meeting; 103. MPEG Meeting; 14-1-2013 - 23-1-2013; Geneva; JCTVC-L1005, 25th February 2013 describes an Intra prediction video coding method configured for a 4:2:2 color format.

WO2012/176406 describes a process of performing intra prediction of an image signal by minimum encoding block units set in advance, in which, if a split mode is set in which the brightness signal is split horizontally and vertically, an intra prediction unit performs intra prediction of a color difference signal by prediction block units of intra prediction of the color difference signal inside of minimum encoding blocks set according to the color difference format. A second encoded bit string generation unit generates an encoded string of information relating to the intra brightness prediction mode of the brightness signal prediction blocks, and information relating to the intra color difference prediction mode of the color difference signal prediction blocks.

SUMMARY

It is an object of the present invention to substantially overcome, or at least ameliorate, one or more disadvantages of existing arrangements.

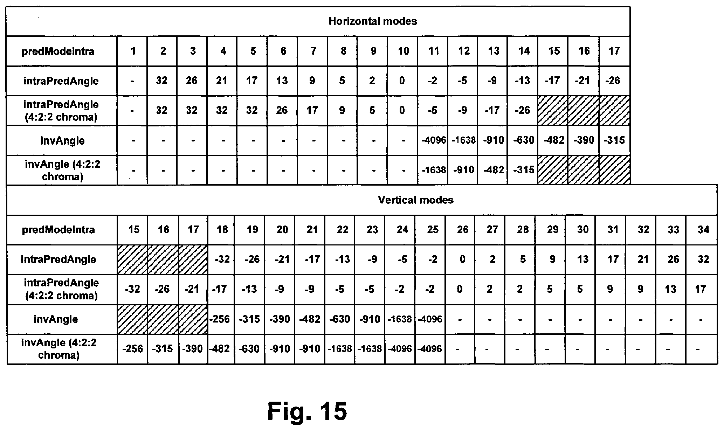

According to one aspect of the present disclosure there is provided a method as set out in any of claims 1 to 4. In a further aspect of the present disclosure there is provided a system as set out in any of claims 5 to 8. In a yet further aspect of the present disclosure there is provided an apparatus according to any of claims 9 to 12. In another aspect of the present disclosure there is provided a computer readable medium as set out in claim 13. The present invention is defined in the independent claims. Enabling disclosure for the invention is found in the embodiment of Figure 15. The remaining embodiments are to be understood as examples which do not describe parts of the present invention.

BRIEF DESCRIPTION OF THE DRAWINGS

At least one embodiment of the present invention will now be described with reference to the following drawings and and appendices, in which:

Fig. 1 is a schematic block diagram showing a video encoding and decoding system;
Figs. 2A and 2B form a schematic block diagram of a general purpose computer system upon which one or both of the video encoding and decoding system of Fig. 1 may be practiced;
Fig. 3 is a schematic block diagram showing functional modules of a video encoder;
Fig. 4 is a schematic block diagram showing functional modules of a video decoder;
Figs. 5A and 5B schematically illustrate chroma formats for representing frame data;
Fig. 6 schematically illustrates a subdivision of a coding tree unit (CTB) into multiple coding units (CUs), prediction units (PUs) and transform units (TUs);
Fig. 7 schematically illustrates directional intra-prediction modes;
Fig. 8A schematically illustrates an intra-prediction process for an example intra-prediction direction;
Fig. 8B schematically illustrates an intra-prediction process for a further example intra-prediction direction;
Figs. 9A schematically illustrates an intra-predicted prediction unit (PU) on a luma sample grid of a frame configured to use a 4:2:2 chroma format;
Figs. 9B schematically illustrates an intra-predicted prediction unit (PU) on a chroma sample grid of the frame configured to use the 4:2:2 chroma format of Fig. 9A;
Fig. 10 is a schematic block diagram showing functional modules of the intra-frame prediction module of Fig. 4;
Fig. 11 is a schematic block diagram showing a method of generating intra-predicted samples in the video encoder of Fig. 3 or the video decoder of Fig. 4;
Fig. 12 shows a table for converting an intra-prediction mode into an intra-prediction angle and an inverse angle, with quantising of the intra-prediction angle and the inverse angle;
Fig. 13 shows a table for converting of an intra-prediction mode into an intra-prediction angle and an inverse angle, with quantising of the intra-prediction angle and the inverse angle and a boundary between horizontal and vertical intra-prediction modes determined by a block type;
Fig. 14 shows a table for converting an intra-prediction mode into an intra-prediction angle and an inverse angle, with an alternative quantisation of the intra-prediction angle and the inverse angle;
Fig. 15 shows a table for converting of an intra-prediction mode into an intra-prediction angle and an inverse angle, with an alternative quantisation of the intra-prediction angle and the inverse angle and a boundary between horizontal and vertical intra-prediction modes determined by a block type;

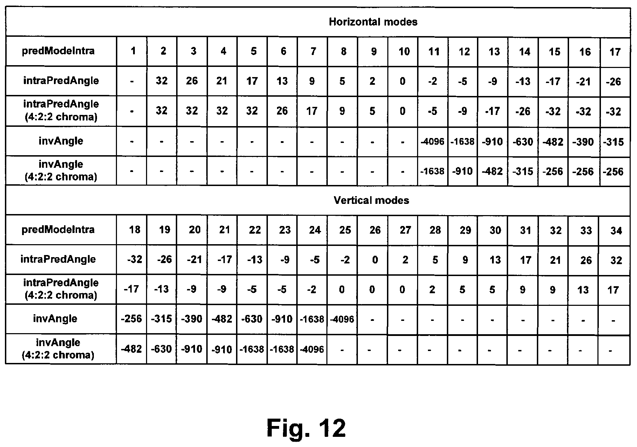

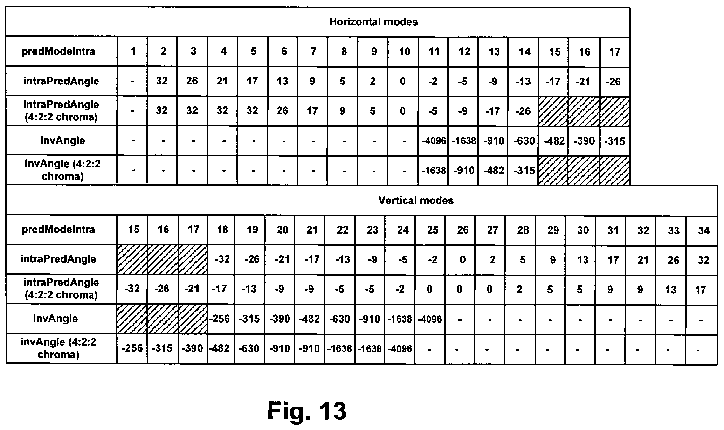

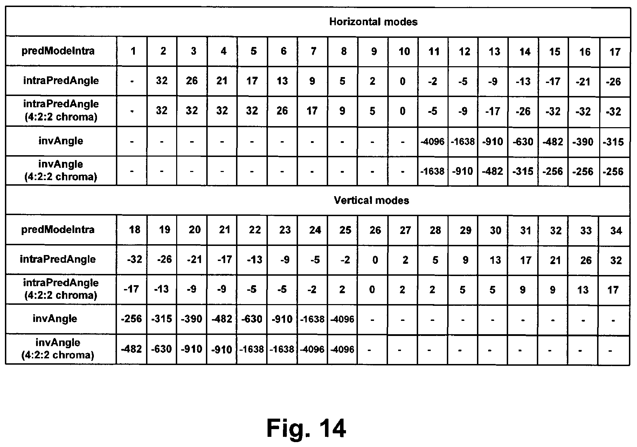

Appendix A shows an example of the method of generating intra-predicted samples that accords with Fig. 12;
Appendix B shows an example of the method of generating intra-predicted samples that accords with Fig. 13;
Appendix C shows an example of the method of generating intra-predicted samples that accords with Fig. 14; and
Appendix D shows an example of the method of generating intra-predicted samples that accords with Fig. 15.

DETAILED DESCRIPTION INCLUDING BEST MODE

Where reference is made in any one or more of the accompanying drawings to steps and/or features, which have the same reference numerals, those steps and/or features have for the purposes of this description the same function(s) or operation(s), unless the contrary intention appears.

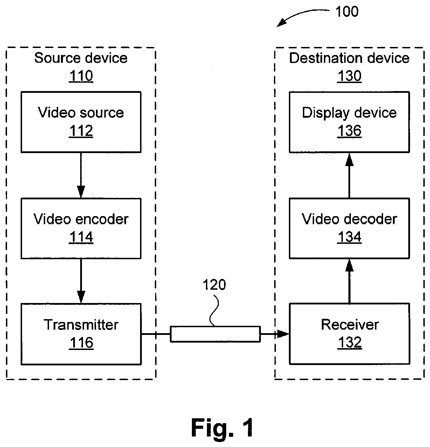

Fig. 1 is a schematic block diagram showing function modules of a video encoding and decoding system 100. The system 100 may utilise techniques for residual quad-tree transform selection that result in an improved selection of available transform logic for colour channels. The colour channels may include either chroma channel for all chroma formats supported by the system 100. The system 100 includes a source device 110 and a destination device 130. A communication channel 120 is used to communicate encoded video information from the source device 110 to the destination device 130. The source device 110 and destination device 130 may comprise respective mobile telephone handsets, in which case the communication channel 120 is a wireless channel. Alternatively, the source device 110 and destination device 130 may comprise video conferencing equipment, in which case the communication channel 120 is typically a wired channel, such as an internet connection. Moreover, the source device 110 and the destination device 130 may comprise any of a wide range of devices, including devices supporting over the air television broadcasts, cable television applications, internet video applications and applications where encoded video is captured on some storage medium or a file server.

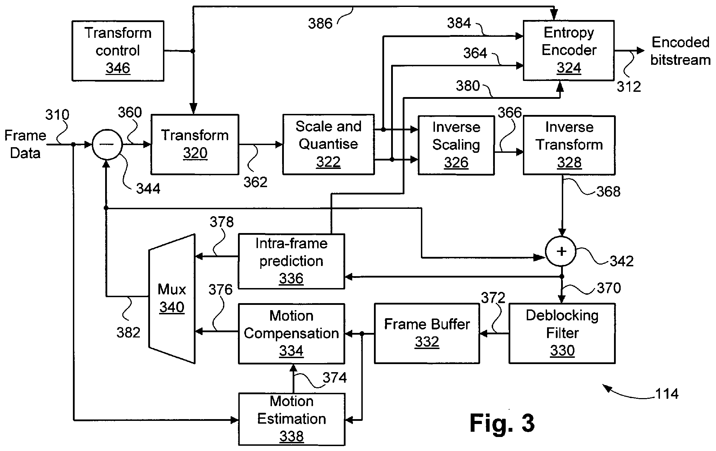

As shown in Fig. 1, the source device 110 includes a video source 112, a video encoder 114 and a transmitter 116. The video source 112 typically comprises a source of captured video frame data, such as an imaging sensor, a previously captured video sequence stored on a non-transitory recording medium, or a video feed from a remote imaging sensor. Examples of source devices 110 that may include an imaging sensor as the video source 112 include smart-phones, video camcorders and network video cameras. The video encoder 114 converts the captured frame data from the video source 112 into encoded video data and will be described further with reference to Fig. 3. The encoded video data is typically transmitted by the transmitter 116 over the communication channel 120 as encoded video data (or "encoded video information"). It is also possible for the encoded video data to be stored in some storage device, such as a "Flash" memory or a hard disk drive, until later being transmitted over the communication channel 120.

The destination device 130 includes a receiver 132, a video decoder 134 and a display device 136. The receiver 132 receives encoded video data from the communication channel 120 and passes received video data to the video decoder 134. The video decoder 134 then outputs decoded frame data to the display device 136. Examples of the display device 136 include a cathode ray tube, a liquid crystal display, such as in smart-phones, tablet computers, computer monitors or in stand-alone television sets. It is also possible for the functionality of each of the source device 110 and the destination device 130 to be embodied in a single device.

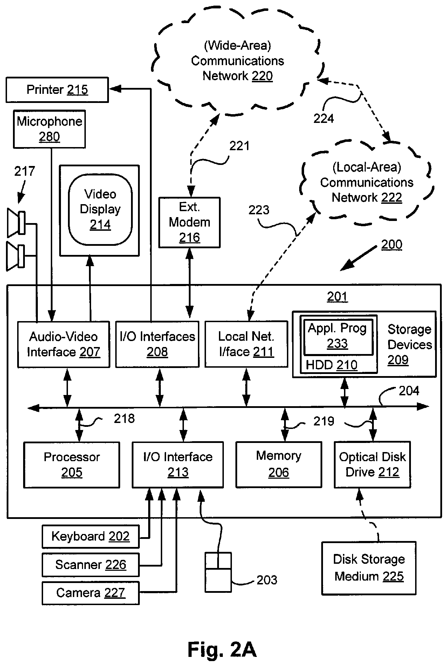

Notwithstanding the example devices mentioned above, each of the source device 110 and destination device 130 may be configured within a general purpose computing system, typically through a combination of hardware and software components. Fig. 2A illustrates such a computer system 200, which includes: a computer module 201; input devices such as a keyboard 202, a mouse pointer device 203, a scanner 226, a camera 227, which may be configured as the video source 112, and a microphone 280; and output devices including a printer 215, a display device 214, which may be configured as the display device 136, and loudspeakers 217. An external Modulator-Demodulator (Modem) transceiver device 216 may be used by the computer module 201 for communicating to and from a communications network 220 via a connection 221. The communications network 220, which may represent the communication channel 120, may be a wide-area network (WAN), such as the Internet, a cellular telecommunications network, or a private WAN. Where the connection 221 is a telephone line, the modem 216 may be a traditional "dial-up" modem. Alternatively, where the connection 221 is a high capacity (e.g., cable) connection, the modem 216 may be a broadband modem. A wireless modem may also be used for wireless connection to the communications network 220. The transceiver device 216 may provide the functionality of the transmitter 116 and the receiver 132 and the communication channel 120 may be embodied in the connection 221.

The computer module 201 typically includes at least one processor unit 205, and a memory unit 206. For example, the memory unit 206 may have semiconductor random access memory (RAM) and semiconductor read only memory (ROM). The computer module 201 also includes an number of input/output (I/O) interfaces including: an audio-video interface 207 that couples to the video display 214, loudspeakers 217 and microphone 280; an I/O interface 213 that couples to the keyboard 202, mouse 203, scanner 226, camera 227 and optionally a joystick or other human interface device (not illustrated); and an interface 208 for the external modem 216 and printer 215. In some implementations, the modem 216 may be incorporated within the computer module 201, for example within the interface 208. The computer module 201 also has a local network interface 211, which permits coupling of the computer system 200 via a connection 223 to a local-area communications network 222, known as a Local Area Network (LAN). As illustrated in Fig. 2A, the local communications network 222 may also couple to the wide network 220 via a connection 224, which would typically include a so-called "firewall" device or device of similar functionality. The local network interface 211 may comprise an Ethernet™ circuit card, a Bluetooth™ wireless arrangement or an IEEE 802.11 wireless arrangement; however, numerous other types of interfaces may be practiced for the interface 211. The local network interface 211 may also provide the functionality of the transmitter 116 and the receiver 132 and communication channel 120 may also be embodied in the local communications network 222.

The I/O interfaces 208 and 213 may afford either or both of serial and parallel connectivity, the former typically being implemented according to the Universal Serial Bus (USB) standards and having corresponding USB connectors (not illustrated). Storage devices 209 are provided and typically include a hard disk drive (HDD) 210. Other storage devices such as a floppy disk drive and a magnetic tape drive (not illustrated) may also be used. An optical disk drive 212 is typically provided to act as a non-volatile source of data. Portable memory devices, such optical disks (e.g. CD-ROM, DVD, Blu-ray Disc™), USB-RAM, portable, external hard drives, and floppy disks, for example, may be used as appropriate sources of data to the computer system 200. Typically, any of the HDD 210, optical drive 212, networks 220 and 222 may also be configured to operate as the video source 112, or as a destination for decoded video data to be stored for reproduction via the display 214.

The components 205 to 213 of the computer module 201 typically communicate via an interconnected bus 204 and in a manner that results in a conventional mode of operation of the computer system 200 known to those in the relevant art. For example, the processor 205 is coupled to the system bus 204 using a connection 218. Likewise, the memory 206 and optical disk drive 212 are coupled to the system bus 204 by connections 219. Examples of computers on which the described arrangements can be practised include IBM-PC's and compatibles, Sun SPARCstations, Apple Mac™ or alike computer systems.

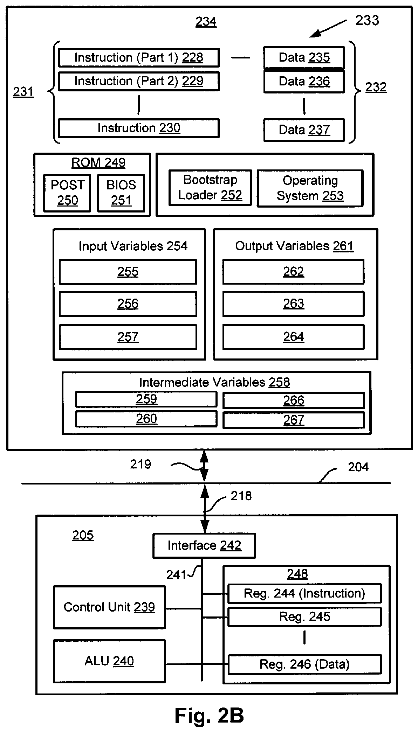

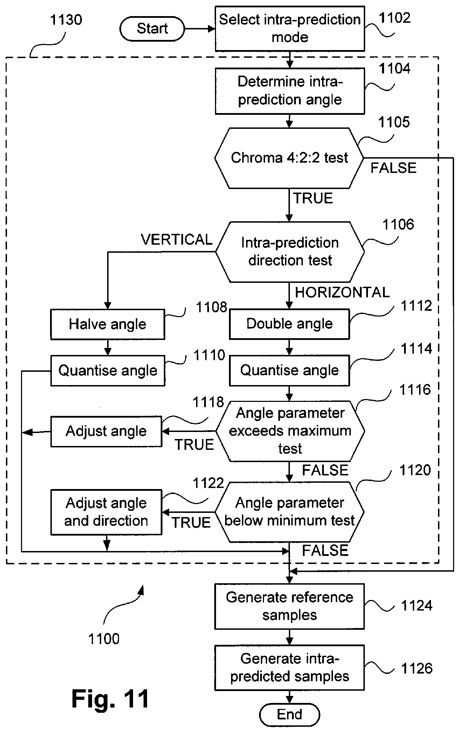

Where appropriate or desired, the video encoder 114 and the video decoder 134, as well as methods described below, may be implemented using the computer system 200 wherein the video encoder 114, the video decoder 134 and the process of Fig. 11, to be described, may be implemented as one or more software application programs 233 executable within the computer system 200. In particular, the video encoder 114, the video decoder 134 and the steps of the described methods are effected by instructions 231 (see Fig. 2B) in the software 233 that are carried out within the computer system 200. The software instructions 231 may be formed as one or more code modules, each for performing one or more particular tasks. The software may also be divided into two separate parts, in which a first part and the corresponding code modules performs the described methods and a second part and the corresponding code modules manage a user interface between the first part and the user.

The software may be stored in a computer readable medium, including the storage devices described below, for example. The software is loaded into the computer system 200 from the computer readable medium, and then executed by the computer system 200. A computer readable medium having such software or computer program recorded on the computer readable medium is a computer program product. The use of the computer program product in the computer system 200 preferably effects an advantageous apparatus for implementing the video encoder 114, the video decoder 134 and the described methods.

The software 233 is typically stored in the HDD 210 or the memory 206. The software is loaded into the computer system 200 from a computer readable medium, and executed by the computer system 200. Thus, for example, the software 233 may be stored on an optically readable disk storage medium (e.g., CD-ROM) 225 that is read by the optical disk drive 212.

In some instances, the application programs 233 may be supplied to the user encoded on one or more CD-ROMs 225 and read via the corresponding drive 212, or alternatively may be read by the user from the networks 220 or 222. Still further, the software can also be loaded into the computer system 200 from other computer readable media. Computer readable storage media refers to any non-transitory tangible storage medium that provides recorded instructions and/or data to the computer system 200 for execution and/or processing. Examples of such storage media include floppy disks, magnetic tape, CD-ROM, DVD, Blu-ray Disc, a hard disk drive, a ROM or integrated circuit, USB memory, a magneto-optical disk, or a computer readable card such as a PCMCIA card and the like, whether or not such devices are internal or external of the computer module 201. Examples of transitory or non-tangible computer readable transmission media that may also participate in the provision of the software, application programs, instructions and/or video data or encoded video data to the computer module 401 include radio or infra-red transmission channels as well as a network connection to another computer or networked device, and the Internet or Intranets including e-mail transmissions and information recorded on Websites and the like.

The second part of the application programs 233 and the corresponding code modules mentioned above may be executed to implement one or more graphical user interfaces (GUIs) to be rendered or otherwise represented upon the display 214. Through manipulation of typically the keyboard 202 and the mouse 203, a user of the computer system 200 and the application may manipulate the interface in a functionally adaptable manner to provide controlling commands and/or input to the applications associated with the GUI(s). Other forms of functionally adaptable user interfaces may also be implemented, such as an audio interface utilizing speech prompts output via the loudspeakers 217 and user voice commands input via the microphone 280.

Fig. 2B is a detailed schematic block diagram of the processor 205 and a "memory" 234. The memory 234 represents a logical aggregation of all the memory modules (including the HDD 209 and semiconductor memory 206) that can be accessed by the computer module 201 in Fig. 2A.

When the computer module 201 is initially powered up, a power-on self-test (POST) program 250 executes. The POST program 250 is typically stored in a ROM 249 of the semiconductor memory 206 of Fig. 2A. A hardware device such as the ROM 249 storing software is sometimes referred to as firmware. The POST program 250 examines hardware within the computer module 201 to ensure proper functioning and typically checks the processor 205, the memory 234 (209, 206), and a basic input-output systems software (BIOS) module 251, also typically stored in the ROM 249, for correct operation. Once the POST program 250 has run successfully, the BIOS 251 activates the hard disk drive 210 of Fig. 2A. Activation of the hard disk drive 210 causes a bootstrap loader program 252 that is resident on the hard disk drive 210 to execute via the processor 205. This loads an operating system 253 into the RAM memory 206, upon which the operating system 253 commences operation. The operating system 253 is a system level application, executable by the processor 205, to fulfil various high level functions, including processor management, memory management, device management, storage management, software application interface, and generic user interface.

The operating system 253 manages the memory 234 (209, 206) to ensure that each process or application running on the computer module 201 has sufficient memory in which to execute without colliding with memory allocated to another process. Furthermore, the different types of memory available in the computer system 200 of Fig. 2A must be used properly so that each process can run effectively. Accordingly, the aggregated memory 234 is not intended to illustrate how particular segments of memory are allocated (unless otherwise stated), but rather to provide a general view of the memory accessible by the computer system 200 and how the memory is used.

As shown in Fig. 2B, the processor 205 includes a number of functional modules including a control unit 239, an arithmetic logic unit (ALU) 240, and a local or internal memory 248, sometimes called a cache memory. The cache memory 248 typically includes a number of storage registers 244-246 in a register section. One or more internal busses 241 functionally interconnect these functional modules. The processor 205 typically also has one or more interfaces 242 for communicating with external devices via the system bus 204, using a connection 218. The memory 234 is coupled to the bus 204 using a connection 219.

The application program 233 includes a sequence of instructions 231 that may include conditional branch and loop instructions. The program 233 may also include data 232 which is used in execution of the program 233. The instructions 231 and the data 232 are stored in memory locations 228, 229, 230 and 235, 236, 237, respectively. Depending upon the relative size of the instructions 231 and the memory locations 228-230, a particular instruction may be stored in a single memory location as depicted by the instruction shown in the memory location 230. Alternately, an instruction may be segmented into a number of parts each of which is stored in a separate memory location, as depicted by the instruction segments shown in the memory locations 228 and 229.

In general, the processor 205 is given a set of instructions which are executed therein. The processor 205 waits for a subsequent input, to which the processor 205 reacts to by executing another set of instructions. Each input may be provided from one or more of a number of sources, including data generated by one or more of the input devices 202, 203, data received from an external source across one of the networks 220, 202, data retrieved from one of the storage devices 206, 209 or data retrieved from a storage medium 225 inserted into the corresponding reader 212, all depicted in Fig. 2A. The execution of a set of the instructions may in some cases result in output of data. Execution may also involve storing data or variables to the memory 234.

The video encoder 114, the video decoder 134 and the described methods may use input variables 254, which are stored in the memory 234 in corresponding memory locations 255, 256, 257. The video encoder 114, the video decoder 134 and the described methods produce output variables 261, which are stored in the memory 234 in corresponding memory locations 262, 263, 264. Intermediate variables 258 may be stored in memory locations 259, 260, 266 and 267.

Referring to the processor 205 of Fig. 2B, the registers 244, 245, 246, the arithmetic logic unit (ALU) 240, and the control unit 239 work together to perform sequences of micro-operations needed to perform "fetch, decode, and execute" cycles for every instruction in the instruction set making up the program 233. Each fetch, decode, and execute cycle comprises:

(a) a fetch operation, which fetches or reads an instruction 231 from a memory location 228, 229, 230;
(b) a decode operation in which the control unit 239 determines which instruction has been fetched; and
(c) an execute operation in which the control unit 239 and/or the ALU 240 execute the instruction.

Thereafter, a further fetch, decode, and execute cycle for the next instruction may be executed. Similarly, a store cycle may be performed by which the control unit 239 stores or writes a value to a memory location 232.

Each step or sub-process in the process of Fig. 11 to be described is associated with one or more segments of the program 233 and is typically performed by the register section 244, 245, 247, the ALU 240, and the control unit 239 in the processor 205 working together to perform the fetch, decode, and execute cycles for every instruction in the instruction set for the noted segments of the program 233.

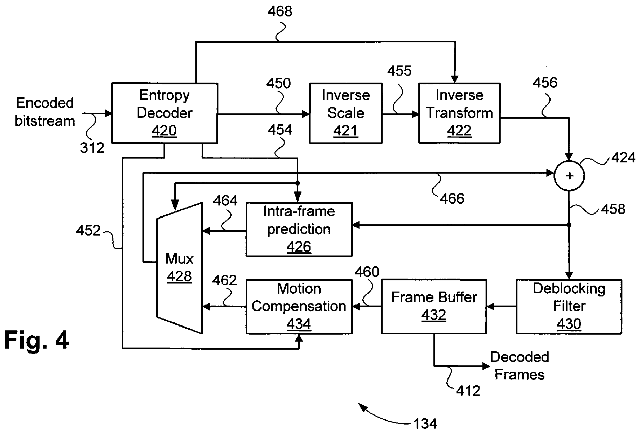

Fig. 3 is a schematic block diagram showing functional modules of the video encoder 114. Fig. 4 is a schematic block diagram showing functional modules of the video decoder 134. The video encoder 114 and video decoder 134 may be implemented using a general-purpose computer system 200, as shown in Figs. 2A and 2B, where the various functional modules may be implemented by dedicated hardware within the computer system 200, by software executable within the computer system 200 such as one or more software code modules of the software application program 233 resident on the hard disk drive 205 and being controlled in its execution by the processor 205, or alternatively by a combination of dedicated hardware and software executable within the computer system 200. The video encoder 114, the video decoder 134 and the described methods may alternatively be implemented in dedicated hardware, such as one or more integrated circuits performing the functions or sub functions of the described methods. The dedicated hardware may include graphic processors, digital signal processors, application specific integrated circuits (ASICs), field programmable gate arrays (FPGAs) or one or more microprocessors and associated memories. In particular the video encoder 114 comprises modules 320-346 and the video decoder 134 comprises modules 420-434 which may each be implemented as one or more software code modules of the software application program 233.

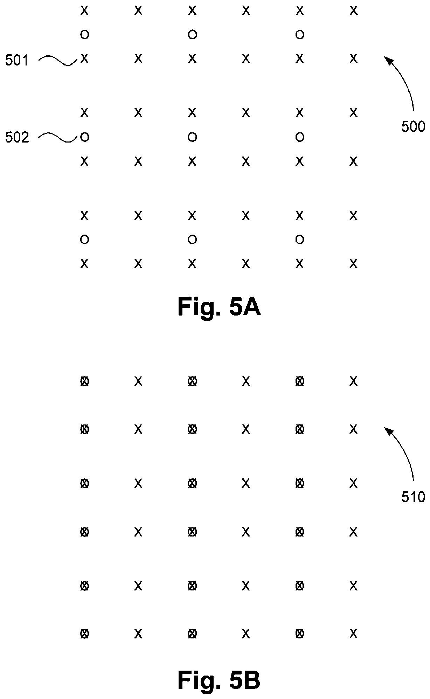

Although the video encoder 114 of Fig. 3 is an example of a high efficiency video coding (HEVC) video encoding pipeline, other video codecs may also be used to perform the processing stages described herein. The video encoder 114 receives captured frame data, such as a series of frames, each frame including one or more colour channels. Each frame comprises one sample grid per colour channel. Colour information is represented using a 'colour space', such as recommendation ITU-R BT.709 ('YUV'), although other colour spaces are also possible. When a colour space, such as the YUV colour space, is used, the colour channels include a luma colour channel ('Y') and two chroma colour channels ('U' and 'V'). Moreover, differing amounts of information may be included in the sample grid of each colour channel of the captured frame data, depending on the sampling of the image or through application of filtering to resample the captured frame data. Several possible sampling methods, known as 'chroma formats' exist, some of which will be described with reference to Figs. 5A and 5B.

The video encoder 114 divides each frame of the captured frame data, such as frame data 310, into regions generally referred to as 'coding tree blocks' (CTBs). Each coding tree block (CTB) includes a hierarchical quad-tree subdivision of a portion of the frame into a collection of 'coding units' (CUs). The coding tree block (CTB) generally occupies an area of 64x64 luma samples, although other sizes are possible, such as 16x16 or 32x32. In some cases even larger sizes for the coding tree block (CTB), such as 128x128 luma samples, may be used. The coding tree block (CTB) may be sub-divided via a split into four equal sized regions to create a new hierarchy level. Splitting may be applied recursively, resulting in a quad-tree hierarchy. As the coding tree block (CTB) side dimensions are always powers of two and the quad-tree splitting always results in a halving of the width and height, the region side dimensions are also always powers of two. When no further split of a region is performed, a 'coding unit' (CU) is said to exist within the region. When no split is performed at the top level (or typically the "highest level") of the coding tree block, the region occupying the entire coding tree block contains one coding unit (CU) that is generally referred to as a 'largest coding unit' (LCU). A minimum size also exists for each coding unit (CU), such as the area occupied by 8x8 luma samples, although other minimum sizes are also possible. Coding units of the minimum size are generally referred to as 'smallest coding units' (SCUs). As a result of the quad-tree hierarchy, the entirety of the coding tree block (CTB) is occupied by one or more coding units (CUs).

The video encoder 114 produces one or more arrays of data samples, generally referred to as 'prediction units' (PUs) for each coding unit (CU). Various arrangements of prediction units (PUs) in each coding unit (CU) are possible, with a requirement that the prediction units (PUs) do not overlap and that the entirety of the coding unit (CU) is occupied by the one or more prediction units (PUs). The requirement that the prediction units (PUs) do not overlap and that the entirety of the coding unit (CU) is occupied by the one or more prediction units (PUs) ensures that the prediction units (PUs) cover the entire frame area.

The video encoder 114 operates by outputting, from a multiplexer module 340, a prediction unit (PU) 382. A difference module 344 outputs the difference between the prediction unit (PU) 382 and a corresponding 2D array of data samples, in the spatial domain, from a coding unit (CU) of the coding tree block (CTB) of the frame data 310, the difference being known as a 'residual sample array' 360. The residual sample array 360 may be transformed into the frequency domain in a transform module 320. The residual sample array 360 from the difference module 344 is received by the transform module 320, which converts (or 'encodes') the residual sample array 360 from a spatial representation to a frequency domain representation by applying a 'forward transform'. The transform module 320 creates transform coefficients. The transform coefficients are configured as the residual transform array 362 for each transform in a transform unit (TU) in a hierarchical sub-division of the coding unit (CU). The coding unit (CU) is sub-divided into one or more transform units (TUs). The sub-divided coding unit (CU) may be referred to as a 'residual quad-tree' or a 'residual quad-tree (RQT)'. The sub-division of the residual data of the coding unit (CU) into a residual quad-tree (RQT) is performed under control of a transform control module 346.

The transform control module 346 may test the bit-rate required in the encoded bitstream 312 for various possible arrangements of transform units (TUs) in the residual quad-tree of a present coding unit (CU) according to a 'rate-distortion criterion'. The rate-distortion criterion is a measure of the acceptable trade-off between the bit-rate of the encoded bitstream 312, or a local region thereof, and the distortion, or difference between frames present in the frame buffer 332 and the captured frame data. In some arrangements, the rate-distortion criterion considers only the rate and distortion for luma and thus the encoding decision is made based only on characteristics of the luma channel. Generally, the residual quad-tree (RQT) is shared between luma and chroma, and the amount of chroma information is relatively small compared to luma, so considering luma only in the rate-distortion criterion is appropriate. Where decisions specific to chroma only need to be made, the rate-distortion criterion may be expanded to consider chroma bit costs and rate costs, or alternatively, a rule or 'heuristic' may be introduced in order to make a reasonable decision from chroma, based on the rate-distortion criterion decisions for luma. The transform control module 346 may thus select an arrangement of transform units (TUs) as the residual quad-tree. The selected arrangement is configured for encoding the residual sample array 360 of the present coding unit (CU) from a set of possible transform units (TUs). The configuration of the residual quad-tree (RQT) of the coding unit (CU) is specified by a set of split transform flags 386. The residual quad-tree (RQT) will be further discussed below, with reference to Figs. 5A and 5B.

The set of possible transform units (TUs) for a residual quad-tree is dependent on the available transform sizes and coding unit (CU) size. The residual quad-tree may result in a lower bit-rate in the encoded bitstream 312, thus achieving higher coding efficiency. A larger sized transform unit (TU) results in use of larger transforms for both luma and chroma. Generally, larger transforms provide a more compact representation of a residual sample array with sample data (or 'residual energy') spread across the residual sample array. Smaller transform units (TUs) provide a more compact representation of a residual sample array with residual energy localised to specific regions of the residual sample array. Thus, the many possible configurations of the residual quad-tree provides a useful means for achieving high coding efficiency of the residual sample array 360 in the high efficiency video coding (HEVC) standard under development.

For the high efficiency video coding (HEVC) standard under development, conversion of the residual sample array 360 to the frequency domain representation is implemented using a modified discrete cosine transform (DCT), in which a DCT is modified to be implemented using shifts and additions. Various sizes of the residual sample array 360 and the transform coefficients 362 are possible, in accordance with supported transform sizes. In the high efficiency video coding (HEVC) standard under development, transforms are performed on 2D arrays of data samples having sizes, such as 32x32, 16x16, 8x8 and 4x4. Thus, a predetermined set of transform sizes are available to the video encoder 114. Moreover, the set of transform sizes may differ between the luma channel and the chroma channels.

Two-dimensional transforms are generally configured to be 'separable', enabling implementation as a first set of 1D transforms operating on the 2D array of data samples in one direction (e.g. on rows). The first set of 1D transforms is followed by a second set of 1D transform operating on the 2D array of data samples output from the first set of 1D transforms in the other direction (e.g. on columns). Transforms having the same width and height are generally referred to as 'square transforms'. Additional transforms, having differing widths and heights may also be used and are generally referred to as 'non-square transforms'. The row and column one-dimensional transforms may be combined into specific hardware or software modules, such as a 4x4 transform module or an 8x8 transform module.

Transforms having larger dimensions require larger amounts of circuitry to implement, even though such larger dimensioned transforms may be infrequently used. Accordingly, the high efficiency video coding (HEVC) standard under development defines a maximum transform size of 32x32 luma samples. The integrated nature of the transform implementation defined for the high efficiency video coding (HEVC) standard under development also introduces a preference to reduce the number of non-square transform sizes supported. The non-square transform sizes typically require either entirely new hardware to be implemented for each non-square transform size or require additional selection logic to enable reconfiguration of various 1D transform logic into a particular non-square transform size. Additionally, non-square transform sizes may also increase the complexity of software implementations by introducing additional methods to perform transform and inverse transform operations for each supported non-square transform size, and increasing complexity to implement the necessary buffer management functionality of the additional transform sizes.

Transforms may be applied to both the luma and chroma channels. Differences between the handling of luma and chroma channels with regard to transform units (TUs) exist and will be discussed below with reference to Figs. 5A and 5B. Each residual quad-tree occupies one coding unit (CU) and is defined as a quad-tree decomposition of the coding unit (CU) into a hierarchy including one transform unit (TU) at each leaf node of the residual quad-tree hierarchy, with each transform unit (TU) able to make use of specific transforms of the supported transform sizes. Similarly to the coding tree block (CTB), it is necessary for the entirety of the coding unit (CU) to be occupied by one or more transform units (TUs). At each level of the residual quad-tree hierarchy a 'coded block flag value' signals possible presence of a transform in each colour channel, either at the present hierarchy level (when no further splits are present), or to signal that lower hierarchy levels may contain at least one transform among the resulting transform units (TUs). When the coded block flag value is zero, all residual coefficients at the present or lower hierarchy levels are known to be zero and thus no transform is required to be performed for the corresponding colour channel of any transform units (TU) of the residual quad-tree (either at the present hierarchical level or at lower hierarchical levels). When the coded block flag value is one, if the present region is not further sub-divided then the region contains a transform which requires at least one non-zero residual coefficient. If the present region is further sub-divided, a coded block flag value of one indicates that each resulting sub-divided region may include non-zero residual coefficients. In this manner, for each colour channel, zero or more transforms may cover a portion of the area of the coding unit (CU) varying from none up to the entirety of the coding unit (CU). Separate coded block flag values exist for each colour channel. Each coded block flag value is not required to be encoded, as cases exist where there is only one possible coded block flag value.

The transform coefficients 362 are input to the scale and quantise module 322 where data sample values thereof are scaled and quantised, according to a determined quantisation parameter 384, to produce a residual data array 364. The scale and quantisation results in a loss of precision, dependent on the value of the determined quantisation parameter 384. A higher value of the determined quantisation parameter 384 results in greater information being lost from the residual data. The lost information increases the compression achieved by the video encoder 114 at the expense of reducing the visual quality of output from the video decoder 134. The determined quantisation parameter 384 may be adapted during encoding of each frame of the frame data 310. Alternatively, the determined quantisation parameter 384 may be fixed for a portion of the frame data 310. In a further alternative, the determined quantisation parameter 384 may be fixed for an entire frame of frame data 310. Other adaptations of the determined quantisation parameter 384 are also possible, such as quantising different residual coefficients with separate values.

The residual data array 364 and determined quantisation parameter 384 are taken as input to an inverse scaling module 326. The inverse scaling module 326 reverses the scaling performed by the scale and quantise module 322 to produce rescaled data arrays 366, which are rescaled versions of the residual data array 364. The residual data array 364, the determined quantisation parameter 384 and the split transform flags 386 are also taken as input to an entropy encoder module 324. The entropy encoder module 324 encodes the values of the residual data array 364 in an encoded bitstream 312 (or 'video bitstream'). Due to the loss of precision resulting from the scale and quantise module 322, the rescaled data arrays 366 are not identical to the original values in the array 363. The rescaled data arrays 366 from the inverse scaling module 326 are then output to an inverse transform module 328. The inverse transform module 328 performs an inverse transform from the frequency domain to the spatial domain to produce a spatial-domain representation 368 of the rescaled transform coefficient arrays 366. The spatial-domain representation 368 is substantially identical to a spatial domain representation that is produced at the video decoder 134. The spatial-domain representation 368 is then input to a summation module 342.

A motion estimation module 338 produces motion vectors 374 by comparing the frame data 310 with previous frame data from one or more sets of frames stored in a frame buffer module 332, generally configured within the memory 206. The sets of frames are known as 'reference picture lists'. The motion vectors 374 are then input to a motion compensation module 334 which produces an inter-predicted prediction unit (PU) 376 by filtering data samples stored in the frame buffer module 332, taking into account a spatial offset derived from the motion vectors 374. Not illustrated in Fig. 3, the motion vectors 374 are also passed as syntax elements to the entropy encoder module 324 for encoding in the encoded bitstream 312. The intra-frame prediction module 336 produces an intra-predicted prediction unit (PU) 378 using samples 370 obtained from the summation module 342, which sums the prediction unit (PU) 382 from the multiplexer module 340 and the spatial domain output of the multiplexer 369. The intra-frame prediction module 336 also produces an intra-prediction mode 380 which is sent to the entropy encoder 324 for encoding into the encoded bitstream 312.

Prediction units (PUs) may be generated using either an intra-prediction or an inter-prediction method. Intra-prediction methods make use of data samples adjacent to the prediction unit (PU) that have previously been decoded (typically above and to the left of the prediction unit) in order to generate reference data samples within the prediction unit (PU). Various directions of intra-prediction are possible, referred to as the 'intra-prediction mode'. Inter-prediction methods make use of a motion vector to refer to a block from a selected reference frame. The motion estimation module 338 and motion compensation module 334 operate on motion vectors 374, having a precision of one eighth (1/8) of a luma sample, enabling precise modelling of motion between frames in the frame data 310. The decision on which of the intra-prediction or the inter-prediction method to use is made according to a rate-distortion trade-off between desired bit-rate of the resulting encoded bitstream 312 and the amount of image quality distortion introduced by either the intra-prediction or inter-prediction method. If intra-prediction is used, one intra-prediction mode is selected from the set of possible intra-prediction modes, also according to a rate-distortion trade-off. The multiplexer module 340 selects either the intra-predicted reference samples 378 from the intra-frame prediction module 336, or the inter-predicted prediction unit (PU) 376 from the motion compensation block 334, depending on the decision made by a rate distortion algorithm.

The summation module 342 produces a sum 370 that is input to a de-blocking filter module 330. The de-blocking filter module 330 performs filtering along block boundaries, producing de-blocked samples 372 that are written to the frame buffer module 332 configured within the memory 206. The frame buffer module 332 is a buffer with sufficient capacity to hold data from one or more past frames for future reference as part of a reference picture list.

For the high efficiency video coding (HEVC) standard under development, the encoded bitstream 312 produced by the entropy encoder 324 is delineated into network abstraction layer (NAL) units. Generally, each slice of a frame is contained in one NAL unit. The entropy encoder 324 encodes the residual array 364, the intra-prediction mode 380, the motion vectors and other parameters, collectively referred to as 'syntax elements', into the encoded bitstream 312 by performing a context adaptive binary arithmetic coding (CABAC) algorithm. Syntax elements are grouped together into 'syntax structures'. The groupings may contain recursion to describe hierarchical structures. In addition to ordinal values, such as an intra-prediction mode or integer values, such as a motion vector, syntax elements also include flags to indicate a quad-tree split for example.

Although the video decoder 134 of Fig. 4 is described with reference to a high efficiency video coding (HEVC) video decoding pipeline, other video codecs may also employ the processing stages of modules 420-434. The encoded video information may also be read from memory 206, the hard disk drive 210, a CD-ROM, a Blu-ray™ disk or other computer readable storage medium. Alternatively the encoded video information may be received from an external source, such as a server connected to the communications network 220 or a radio-frequency receiver.

As seen in Fig. 4, received video data, such as the encoded bitstream 312, is input to the video decoder 134. The encoded bitstream 312 may be read from memory 206, the hard disk drive 210, a CD-ROM, a Blu-ray™ disk or other computer readable storage medium. Alternatively the encoded bitstream 312 may be received from an external source such as a server connected to the communications network 220 or a radio-frequency receiver. The encoded bitstream 312 contains encoded syntax elements representing the captured frame data to be decoded.

The encoded bitstream 312 is input to an entropy decoder module 420 which extracts the syntax elements from the encoded bitstream 312 and passes the values of the syntax elements to other blocks in the video decoder 134. The entropy decoder module 420 applies the context adaptive binary arithmetic coding (CABAC) algorithm to decode syntax elements from the encoded bitstream 312. The decoded syntax elements are used to reconstruct parameters within the video decoder 134. Parameters include zero or more residual data array 450, motion vectors 452, a prediction mode 454 and split transform flags 468. The residual data array 450 is passed to an inverse scale module 421, the motion vectors 452 are passed to a motion compensation module 434, and the prediction mode 454 is passed to an intra-frame prediction module 426 and to a multiplexer 428. The inverse scale module 421 performs inverse scaling on the residual data to create reconstructed data 455 in the form of transform coefficients. The inverse scale module 421 outputs the reconstructed data 455 to an inverse transform module 422. The inverse transform module 422 applies an 'inverse transform' to convert (or 'decode') the reconstructed data 455 (i.e., the transform coefficients) from a frequency domain representation to a spatial domain representation, outputting a residual sample array 456 via a multiplexer module 423. The inverse transform module 422 performs the same operation as the inverse transform module 328. The inverse transform module 422 is configured to perform transforms in accordance with the residual quad-tree specified by the split transform flags 468. The transforms performed by the inverse transform module 422 are selected from a predetermined set of transform sizes required to decode an encoded bitstream 312 that is compliant with the high efficiency video coding (HEVC) standard under development.

The motion compensation module 434 uses the motion vectors 452 from the entropy decoder module 420, combined with reference frame data 460 from a frame buffer block 432, configured within the memory 206, to produce an inter-predicted prediction unit (PU) 462 for a prediction unit (PU), being a prediction of output decoded frame data. When the prediction mode 454 indicates that the current prediction unit was coded using intra-prediction, the intra-frame prediction module 426 produces an intra-predicted prediction unit (PU) 464 for the prediction unit (PU) using data samples spatially neighbouring the prediction unit (PU) and a prediction direction also supplied by the prediction mode 454. The spatially neighbouring data samples are obtained from a sum 458, output from a summation module 424. The multiplexer module 428 selects the intra-predicted prediction unit (PU) 464 or the inter-predicted prediction unit (PU) 462 for a prediction unit (PU) 466, depending on the current prediction mode 454. The prediction unit (PU) 466, which is output from the multiplexer module 428, is added to the residual sample array 456 from the inverse scale and transform module 422 by the summation module 424 to produce sum 458. The sum 458 is then input to each of a de-blocking filter module 430 and the intra-frame prediction module 426. The de-blocking filter module 430 performs filtering along data block boundaries, such as transform unit (TU) boundaries, to smooth visible artefacts. The output of the de-blocking filter module 430 is written to the frame buffer module 432 configured within the memory 206. The frame buffer module 432 provides sufficient storage to hold one or more decoded frames for future reference. Decoded frames 412 are also output from the frame buffer module 432 to a display device, such as the display device 136 (e.g., in the form of the display device 214).

Fig. 5A shows a sample grid of a frame portion 500 encoded using a 4:2:0 chroma format. Fig. 5B shows a frame portion 510 encoded using a 4:2:2 chroma format. The chroma format is specified as a configuration parameter to the video encoder 114 and the video encoder 114 encodes a 'chroma_format_idc' syntax element into the encoded bitstream 312 that specifies the chroma format. The video decoder 134 decodes the 'chroma_format_idc' syntax element from the encoded bitstream 312 to determine the chroma format in use. For example, when a 4:2:0 chroma format is in use, the value of chroma format idc is one (1), when a 4:2:2 chroma format is in use, the value of chroma_format_idc is two (2) and when a 4:4:4 chroma format is in use, the value of chroma_format_idc is three (3). In Figs. 5A and 5B, luma sample locations, such as a luma sample location 501, are illustrated using 'X' symbols, and chroma sample locations, such as a chroma sample location 502, are illustrated using 'O' symbols. By sampling the frame portion 500 at the points indicated, a sample grid is obtained for each colour channel when a 4:2:0 chroma format is applied. At each luma sample location X, the luma channel ('Y') is sampled, and at each chroma sample location O, both the chroma channels ('U' and 'V') are sampled. As shown in Fig. 5A, for each chroma sample location, a 2x2 arrangement of luma sample locations exists.

By sampling the luma samples at the luma sample locations and chroma samples at the chroma sample locations indicated in the frame portion 510, a sample grid is obtained for each colour channel when a 4:2:2 chroma format is applied. The same allocation of data samples to colour channels is made for the frame portion 510 as for the frame portion 500. In contrast to the frame portion 500, twice as many chroma sample locations exist in frame portion 510. In frame portion 510 the chroma sample locations are collocated with every second luma sample location. Accordingly, in Fig. 5B, for each chroma sample location, an arrangement of 2x1 luma sample locations exists.

Various allowable dimensions of transform units were described above in units of luma samples. The region covered by a transform applied for the luma channel will thus have the same dimensions as the transform unit dimensions. As the transform units also encode chroma channels, the applied transform for each chroma channel will have dimensions adapted according to the particular chroma format in use. For example, when a 4:2:0 chroma format is in use, a 16x16 transform unit (TU) will use a 16x16 transform for the luma channel, and an 8x8 transform for each chroma channel.

The 'residual quad-tree' (RQT) defines a hierarchy that begins at a 'root node', covering a region containing one or more transform units (TUs) at each 'leaf node' of the hierarchy. At non-leaf nodes the region is divided into four equally-sized 'sub-regions', in a split known as a 'quad-tree split'. Each transform unit (TU) has an associated size (or 'transform size'), generally described as the dimensions of the region containing the transform unit (TU) on the luma sample grid, although the region may also be described as dimensions on the chroma sample grid. The size is dependent on the coding unit (CU) size and the transform depth. Transform units (TUs) with a transform depth of zero have a size equal to the size of the corresponding coding unit (CU). Each increment of the transform depth results in a halving of the dimensions (i.e the side width and height) of transform units (TUs) present in the residual quad-tree at the given transform depth. As the frame includes a luma channel and chroma channels, the coding unit (CU) occupies a region on both the luma sample grid and the chroma sample grid and thus each transform unit (TU) includes information describing both the luma samples on the luma sample grid and the chroma samples on the chroma sample grid. The nature of the information for each transform unit (TU) is dependent on the processing stage of the video encoder 114 or the video decoder 134. At the input to the transform module 320 and the output of the inverse scale and transform module 422, the residual sample array 360 and 456, respectively, contain information for each transform unit (TU) in the spatial domain. The residual sample arrays 360 and 456 may be further divided into a 'chroma residual sample array' and a 'luma residual sample array', due to differences in processing between the luma channel and the chroma channels. At the output of the scale and quantise module 322 and the input of the inverse scale and transform module 422, the residual data array 364 and 450 respectively contain information for each transform unit (TU) in the frequency domain. The residual data arrays 364 and 450 may be further divided into a 'chroma residual data array' and a 'luma residual data array', due to differences in processing between the luma channel and the chroma channels.

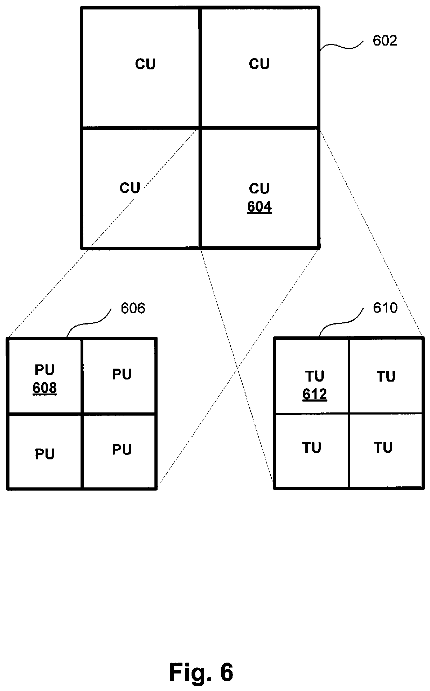

Fig. 6 schematically illustrates a subdivision of a coding tree block (CTB) 602 into multiple coding units (CUs), prediction units (PUs) and transform units (TUs). A quad-tree hierarchy describes the division of a coding tree block (CTB), such as the coding tree block (CTB) 602, into one or more coding units (CUs). The quad-tree hierarchy is defined by one or more 'split coding unit flags' (or 'split_cu_flag' syntax elements) present in the encoded bitstream 312.

In Fig. 6, the coding tree block (CTB) 602 is divided into four equally-sized square regions, each of which is not further sub-divided. Consequently, the coding tree block (CTB) 602 contains four coding units (CUs), such as coding unit (CU) 604. Each coding unit (CU) includes one or more prediction units (PUs) and one or more transform units (TUs).

The decomposition of a coding unit (CU) into one or more prediction units (PUs) is referred to as a 'partitioning' and is generally specified by a 'partition mode' (or 'part_mode' syntax element) present in the encoded bitstream 312. The partition mode may specify that a single prediction unit (PU) occupy the entire coding unit (CU), or that multiple non-overlapping prediction units (PUs) occupy the entire coding unit (CU). For example, as seen in Fig. 6, the coding unit (CU) 604 includes a partitioning 606 that divides the area of the coding unit (CU) 604 into four square prediction units (PUs), such as prediction unit (PU) 608.

Each inter-predicted prediction unit (PUs) has a motion vector and each intra-predicted prediction unit (PU) has a direction. Consequently, visual discontinuities are possible at the boundary between adjacent prediction units (PUs) due to different motion vector(s), direction(s) or combination of different motion vector(s) and direction(s). For a given partitioning, one or more resulting prediction units (PUs) are either all intra-predicted or all inter-predicted, but not a combination of intra-prediction and inter-prediction.

The decomposition of a coding unit (CU) into one or more transform units (TUs) is a quad-tree decomposition that is referred to as a 'residual quad-tree' (RQT). A residual quad-tree (RQT) is generally specified by one or more 'split transform flags' (or 'split_transform_flag' syntax elements) present in the encoded bitstream 312. For example, the coding unit (CU) 604 includes a residual quad-tree (RQT) 610 that divides the area of the coding unit (CU) 604 into four equal-sized regions. Each of the four equal-sized regions is not further sub-divided, resulting in four transform units (TUs), such as transform unit (TU) 612. Each transform unit (TU) includes transforms for the luma channel and for each chroma channel. When the video encoder 114 and the video decoder 134 are configured for the 4:2:0 chroma format, the transform boundary (or 'edge') for the luma channel and for each chroma channel are aligned to the transform unit (TU) boundary. In contrast, when the video encoder 114 and the video decoder 134 are configured for the 4:2:2 chroma format and square transforms are used for each chroma channel, additional transform boundaries are present for each chroma channel. At the boundary of a transform, discontinuities may be visible. The discontinuities reduce the perceived quality of decoded frames 412 compared to the frame data 310. The quantisation parameter applied by the scale and quantise block 322 and the inverse scale module 421 may vary between transform units (TUs). Accordingly, spatially neighbouring transforms may have different quantisation parameters applied. Generally, larger quantisation parameters and differences in the quantisation parameter applied to adjacent transforms result in poorer visual quality, due to increased transform block edge artefacts.

The high efficiency video coding (HEVC) standard under development defines thirty five (35) intra-prediction modes. Of the thirty five (35) intra-prediction modes, one intra-prediction mode is known as a 'DC' mode, one is a 'planar' mode and thirty three (33) are known as directional modes.

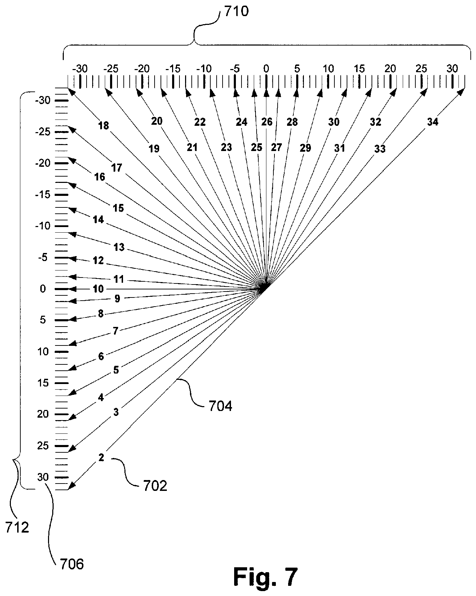

Fig. 7 schematically illustrates all directional (or 'angular') intra-prediction modes. Each of the thirty-three possible intra-prediction directions is illustrated in Fig. 7 using an arrow, such as intra-prediction direction 704. Each of the intra-prediction directions is also enumerated with an intra-prediction mode, such as intra-prediction mode two (2) referenced as 702 in Fig. 7, that corresponds to intra-prediction direction 704. The directional intra-prediction modes are assigned intra-prediction modes two (2) to thirty-four (34). Intra-prediction modes zero (0) and one (1) are reserved for the DC and planar modes. Although the arrows of Fig. 7 all illustrate intra-prediction directions emanating from a central point, the actual 'direction' of intra-prediction is opposite, one-hundred and eighty (180) degrees rotated, from the direction illustrated in Fig. 7. The direction of intra-prediction is one-hundred and eighty (180) degrees rotated due to the described intra-prediction method 1100 taking reference samples (located above and to the left) of a prediction unit (PU) and using the reference samples to create a texture that occupies each sample of the prediction unit (PU). The rotated directions as illustrated in Fig. 7 are shown to provide clarity in illustrating each of the thirty-three intra-prediction directions in a single figure. Intra-prediction modes two (2) to seventeen (17) are predominantly in a horizontal direction and are known as horizontal intra-prediction modes 712. Intra-prediction modes eighteen (18) to thirty-four (34) are predominantly in a vertical direction and are known as vertical intra-prediction modes 710. A threshold that separates the horizontal intra-prediction modes 712 from the vertical intra-prediction modes 710 may be said to exist. Note that intra-prediction mode eighteen (18) corresponds to an angle of 45 degrees and thus is not predominantly horizontal or vertical. However, by convention, in the high efficiency video coding (HEVC) standard, the intra-prediction mode eighteen (18) is considered to be in the predominantly vertical category. Considering the intra-prediction mode eighteen (18) to be in the predominantly vertical category is an arbitrary choice that has no impact on the predicted samples, because the corresponding values for the angle parameter and the inverse angle for the intra-prediction mode eighteen (18) would produce the same predicted samples regardless of a vertical or horizontal categorisation. Each angle is specified by an angle parameter (or 'intraPredangle').

Angle parameters are integers from negative thirty-two (-32) to positive thirty-two (+32). Angle parameters may be interpreted as offsets along either a horizontal axis for the vertical intra-prediction modes or a vertical axis for the horizontal intra-prediction modes. For example, an angle parameter 706 has a value of 30 and exists along a vertical axis that includes all the horizontal intra-prediction modes 712. As shown in Fig. 7, intra-prediction mode 2 has an angle parameter of thirty-two (32). Symmetry exists between the two axes, and within each axis, symmetry exists between positive and negative angle parameters. The two symmetries enable simplification of hardware and software implementations. As a result of these symmetries, a reduced set of angle parameters of [0, 2, 5, 9, 13, 17, 21, 26, 32] may be used to synthesise the full range of angle parameters used across all horizontal intra-prediction modes and vertical intra-prediction modes.

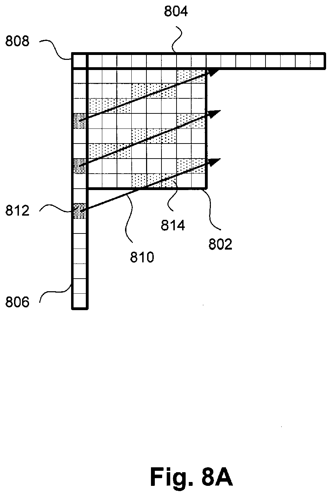

A method 1100 of generating intra-predicted samples in the video encoder 114 or the video decoder 134, will be described in detail below with reference to Fig. 11. Fig. 8A schematically illustrates the intra-prediction method 1100 for an example intra-prediction direction, as performed by the intra-frame prediction module 336 in the video encoder 114 or the intra-frame prediction module 426 in the video decoder 134. The intra-prediction method 1100 is used to populate a prediction unit (PU), such as a prediction unit (PU) 802 with predicted samples, and will be described in detail below. Predicted samples are generated using reference samples. In Fig. 8A, the reference samples include "above" reference samples 804, "left" reference samples 806 and an "above-left" reference sample 808 (collectively, 'reference samples'). The above left reference sample 808 is generally included in both the above reference samples 804 and the left reference samples 806. The above reference samples 804, the left reference samples 806 and the above-left reference sample 808 are generally obtained from the sum 370 in the video encoder 114 or the sum 458 in the video decoder 134. The sum 370 and the sum 485 generally output previously decoded samples of the frame. The above reference samples 804, the left reference samples 806 and the above-left reference sample 808 are generally populated with neighbouring samples'. The neighbouring samples are obtained from the sum 370 or the sum 458 and are spatially located relative to the prediction unit (PU) 802 in accordance with the positioning of the reference samples indicated in Fig. 8A. Depending on the position of the prediction unit (PU) 802 in a frame and on previously decoded prediction units (PUs) in the frame, not all of the neighbouring samples may be available. For neighbouring samples that are not available, the corresponding samples within the reference samples may be populated with default sample values instead. The default sample values may be determined from other neighbouring samples that are available or may each be a constant value.

The directional intra-prediction modes have the property that the predicted samples will be a texture, having a specific direction and determined from reference samples, such as the reference samples 804. When a directional intra-prediction mode is selected, samples from a reference sample buffer are copied across into the prediction unit (PU) in the direction of intra-prediction. For example, an intra-prediction direction 810 results in a texture being produced for the prediction unit (PU) 802 that has an up-right direction. The texture is produced by copying each reference sample within the reference samples, such as reference sample 812, across the prediction unit (PU) 802 in the direction of the intra-prediction, which results in predicted samples(e.g., predicted sample 814) being assigned a value equal to the corresponding reference sample. For clarity, Fig. 8A only shows the relationship between a few reference samples and predicted samples, however all predicted samples in the prediction unit (PU) are generated. Due to the fine granularity of supporting thirty-three (33) directional intra-prediction modes, interpolation of sample values within the prediction unit is required in order to produce a smooth texture. A smooth texture results in a smaller residual being required for the corresponding transform unit (TU) and thus results in greater coding efficiency. The intra-prediction process is performed both by the video encoder 114 and the video decoder 134. The video encoder 114 selects one intra-prediction mode for the prediction unit (PU) from a set of intra-prediction modes and encodes the selected intra-prediction mode into the encoded bitstream 312. All possible intra-prediction modes may be searched by the video encoder 114 to achieve a highest coding efficiency or may search a subset of the possible intra-prediction modes, to make the selection in a reduced amount of time, at the expense of coding efficiency. The video encoder 114 encodes the selected intra-prediction mode in the encoded bitstream 312 using the entropy encoder 324. The video decoder 134 determines the selected intra-prediction mode from the encoded bitstream 312 using the entropy decoder 420.

For intra-prediction modes twenty-six (26) to thirty-four (34) only the above reference samples (e.g., 804) are required. For intra-prediction modes two (2) to ten (10) only the left reference samples (e.g., 806) are required. For intra-prediction modes eleven (11) to twenty-five (25) both the above reference samples (e.g., 804) and the left reference samples (e.g., 806) are required. For intra-prediction modes eleven (11) to twenty-five (25), an additional parameter named the 'inverse angle', or 'invAngle', is defined. For predominantly vertical intra-prediction modes, the inverse angle controls population of the left reference samples and for predominantly horizontal intra-prediction modes, the inverse angle controls population of the above reference samples (e.g., 804). When the inverse angle is defined, the value of the inverse angle is one of [-4096, -1638, -910, -630, -482, - 390, -315, -256, -315, -390, -482, -630, -910, -1638, -4096] for intra-prediction modes eleven to twenty-five respectively. Symmetry at intra-prediction mode eighteen (18) is visible from the list of inverse angle values. Implementations may use the symmetry to reduce complexity. It is desirable to reduce complexity where such reduction in complexity introduces either negligible (or no) loss in coding efficiency. Moreover, although the range of inverse angle values varies from -256 to -4096, only eight (8) discrete values are defined. The inverse angle is used to control population of a reference sample buffer with neighbouring samples, by varying the spacing of accessing individual neighbouring samples. A right-shift of eight (8) bits is applied to the inverse angle when determining an offset for accessing each neigbouring sample. Due to this, an inverse angle value of -256 results in the reference samples being populated with adjacent neighbouring samples. An inverse angle value of -4096 results in reference samples being populated with every sixteenth neighbouring sample.

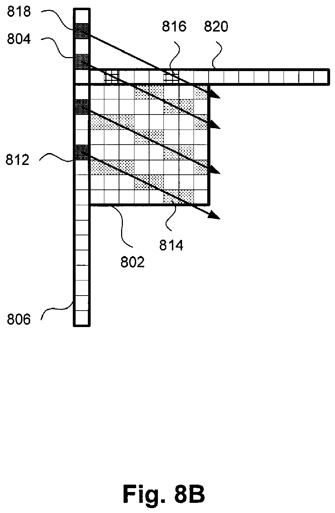

For predominantly vertical intra-prediction modes, the left reference samples are populated as if the left reference samples were an extension of the above reference samples, with left neighbouring samples projected onto the extension of the above reference samples in the opposite direction of intra-prediction (i.e., the direction illustrated in Fig. 8). For predominantly horizontal intra-prediction modes, the above reference samples are populated as if the above reference samples were an extension of the left reference samples, with above neighbouring samples projected onto the extension of the left reference samples in the opposite direction of intra-prediction (i.e., the direction illustrated in Fig. 8A).

Fig. 8B schematically illustrates the intra-prediction method 1100 for an example intra-prediction direction 822 where an inverse angle is used to populate the above reference samples. In the example of Fig. 8B, the intra-prediction direction 822 is a predominantly horizontal intra-prediction direction, but with a down-right direction (e.g. intra-prediction mode fourteen (14) of Fig. 7). Above neighbouring samples 820, such as an above neighbouring sample 816, are used to populate the above reference samples 804 (e.g., above reference sample 818) according to an inverse angle. The inverse angle value is dependent on the intra-prediction mode and for intra-prediction mode fourteen (14), the inverse angle value will be -630. For this inverse angle, every second or third of the above neighbouring samples 820 will be populated in the above reference samples 804.

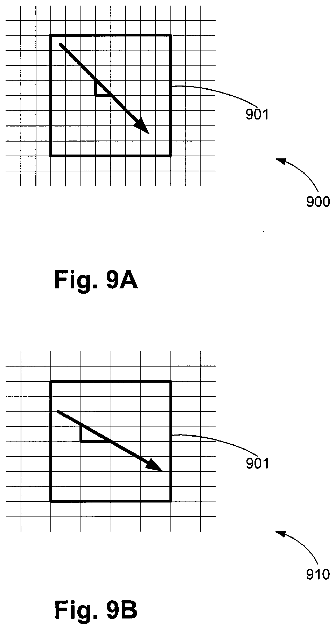

Figs. 9A and 9B schematically illustrate an intra-predicted prediction unit (PU) 901 on a luma sample grid 900 and a chroma sample grid 910 respectively of a frame in video data using a 4:2:2 chroma format. On the luma sample grid 900, the prediction unit (PU) 901 occupies an 8x8 sample region and the intra-prediction mode is eighteen (18), as represented by the arrow of Fig. 9A, resulting in an angle parameter of negative thirty-two (-32). On the luma sample grid 900, this angle parameter results in an effective angle of forty-five (45) degrees. However, on the chroma sample grid 900, the same angle parameter results in a horizontal expansion of the effective angle to twenty-two point five (22.5) degrees. The horizontal expansion is due to the 1x2 size of each chroma sample on the chroma sample grid 910.

The discrepancy between the effective angle for a given angle parameter across the luma sample grid 900 and the chroma sample grid 910 reduces coding efficiency. The coding efficiency is reduced because video data often includes features that are correlated across the luma channel and the chroma channels and thus this is a common scenario for intra-prediction.

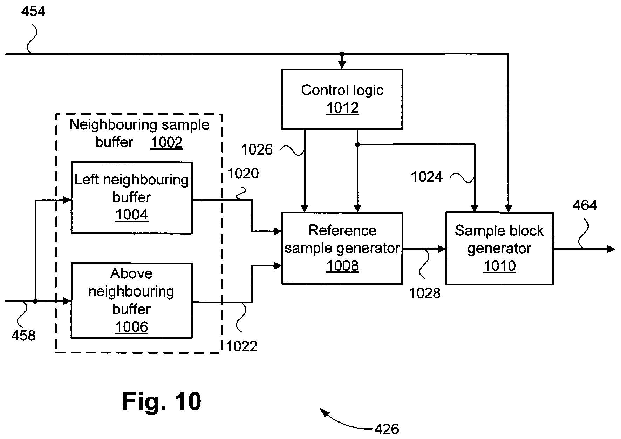

Fig. 10 is a schematic block diagram showing functional modules of the intra-frame prediction module 426 of the video decoder 134. The intra-frame prediction module 336 of the video encoder 114 operates in the same way as the intra-frame prediction module 426 of the video decoder 134 and thus the description of the functional modules of Fig. 10 is also applicable to the intra-frame prediction module 336. The functional modules of Fig. 10 may be implemented by dedicated hardware within the computer system 200, by software executable within the computer system 200 such as one or more software code modules of the software application program 233 resident on the hard disk drive 205 and being controlled in its execution by the processor 205, or alternatively by a combination of dedicated hardware and software executable within the computer system 200.

The sum 458 is received from the summation module 424 and is the sum of a residual and a prediction from neighbouring block(s). A neighbouring sample buffer 1002 provides sufficient storage to hold left neighbouring samples in a left neighbouring buffer 1004 and above neighbouring samples in an above neighbouring buffer 1006. The sum 458 is produced prior to in-loop filtering performed by the deblocking filter module 430. The left neighbouring buffer 1004 outputs left neighbouring samples 1020 and the above neighbouring buffer 1006 outputs above neighbouring samples 1022. A reference sample generator module 1008 produces left reference samples (e.g., 806) and above reference samples (e.g., 804) which are collectively the reference samples 1028 according to angle parameter 1024 and inverse angle 1026. The reference sample generator module 1008 may generate reference samples by copying neighbouring samples from the neighbouring sample buffer 1002. The copying operation may operate in accordance with the description of Figs. 8A and 8B. The reference sample block generator 1008 distinguishes between predominantly vertical intra-prediction modes (i.e., predModeIntra is equal to or greater than 18) and predominantly horizontal intra-prediction modes (i.e., predModeIntra is less than 18). The value 18 (eighteen) defines a threshold between the predominantly horizontal intra-prediction modes and the predominantly vertical intra-prediction modes. The DC and planar modes are handled separately as they are not considered to have a direction. A sample block generator 1010 produces intra-predicted prediction unit (PU) 464 in the form of an array of intra-predicted samples, using the reference samples 1028, the angle parameter 1024 and the prediction mode 454. As with the reference sample block generator 1008, the reference sample block generator 1010 compares the intra-prediction mode (as provided by the prediction mode 454) with a threshold of eighteen (18) to distinguish between predominantly vertical intra-prediction modes (i.e., predModeIntra is equal to or greater than eighteen (18)) and predominantly horizontal intra-prediction modes (i.e., predModeIntra is less than eighteen (18)).

For any given value of the angle parameter and inverse angle (if defined), accessing of left reference samples and above reference samples by the reference sample block generator 1008 for predominantly vertical intra-prediction modes is the transpose of the access for predominantly horizontal intra-prediction modes. This symmetry may be exploited to reduce complexity of the reference sample generation by using the threshold between these two cases to control the operation of a transpose operation.

The reference sample block generator 1010 operates by copying samples from the reference samples 1028 to produce the intra-predicted prediction unit (PU) 464. For example, an intra-prediction mode of eighteen (18) results in an angle parameter of negative thirty-two (-32). The angle parameter of negative thirty-two results in each reference sample from the reference samples 1028 being copied into the prediction unit (PU) in a diagonal down-right pattern. Each location in the prediction unit (PU) is thus populated with a copy of a reference sample in accordance with the angle parameter to produce a block of samples containing a texture.

For any given value of the angle parameter, output of the reference sample block generator 1010 for predominantly vertical intra-prediction modes is the transpose (along an axis defined by intra-prediction mode eighteen (18)) of the output of the reference sample block generator 1010 for predominantly horizontal intra-prediction modes. This symmetry may be exploited to reduce complexity by using the threshold between these two cases to control the operation of a transpose operation.

The complexity of the sample block generator 1010 may be reduced by exploiting symmetries present in the values for the angle parameter. As each sample in the intra-predicted prediction unit (PU) 464 depends only on the reference samples 1028 and the angle parameter 1024, parallelised implementations of the sample block generator 1010 are possible.

Parallelised implementations of the sample block generator 1010 are advantageous for higher resolutions as the parallelised implementations enable 'throughput' (e.g. as measured by the number of samples produced per clock cycle) to be sufficient to support real-time operation at the maximum supported frame rate.

Generally, parallelised implementations have the disadvantage of duplicating logic, resulting in increased circuit size. It is beneficial to simplify the operations being parallelised to reduce the incremental cost of adding parallelism to an implementation of the sample block generator 1010.

Arrangements will be described below with reference to Figs. 11-13, which reduce the incremental cost of adding parallelism to an implementation of the sample block generator 1010. Control logic 1012 produces the angle parameter 1024 and the inverse angle 1025 using the prediction mode 454 and will be described with reference to Figs. 11-13.

Fig. 11 is a schematic block diagram showing a method 1100 of generating intra-predicted samples in the video encoder 114 or the video decoder 134 configured for the 4:2:2 chroma format for a chroma sample array. The method 1100 may be used for generating intra-predicted samples for a chroma channel of a video bitstream, such as the encoded bitstream 312. The method 1100 produces an array of samples for an intra-predicted prediction unit (PU) and will be described with reference to Figs 10 and 11. The method 1100 may be implemented as part of the video encoder 114 or the video decoder 134, which could, for example, be implemented as hardware or software. The method 1100 will be described by way of example where the method 1100 is implemented as one or more code modules of the software application program 233 resident with the hard disk drive 210 and being controlled in its execution by the processor 205.

The method 1100 begins at step determining step 1102 where the processor 205 is used for selecting an intra-prediction mode. The operation of the selecting step 1102 differs between the video encoder 114 and the video decoder 134 as will be described below.

Steps 1104-1126 have the same operation between the video encoder 114 and the video decoder 134. As shown in Fig. 11, step 1130 represents the collective steps 1104-1122 used to determine the angle parameter and the inverse angle from an intra-prediction mode. The steps 1106-1122 of step 1130 are specifically for adjusting the intra-prediction angle due to chroma channel processing when the 4:2:2 chroma format is in use. The steps 1106-1122 of step 1130 adjust the angle parameter 1024 and a threshold (or 'change threshold') between horizontal intra-prediction modes and the vertical intra-prediction modes. The adjustment allows intra-prediction on a chroma sample grid operates consistently with intra-prediction on a luma sample grid. The change threshold between horizontal intra-prediction modes and the vertical intra-prediction modes (as enumerated by 'predModeIntra') indicates the boundary between the predominantly horizontal intra-prediction modes and the predominantly vertical intra-prediction modes as shown in Fig. 7. The change threshold has a value of eighteen (18) for the luma sample grid (and for a chroma channel when a chroma format other than 4:2:2 is in use). For the chroma channel when a 4:2:2 chroma format is in use, the change threshold has a value of fifteen (15). The steps 1106-1122 of step 1130 are configured for modifying the change threshold, if the adjusted angle exceeds a predetermined value. The modified change threshold is configured for converting the adjusted intra-prediction angle from one of the plurality of horizontal intra-prediction modes to a vertical intra-prediction mode.

In the video encoder 114, at step 1102, the processor 205 is used for selecting which intra-prediction mode is to be used for a prediction unit (PU). The intra-prediction mode selected at step 1102 may be one of a plurality of horizontal intra-prediction modes. Generally, at the step 1102, the processor 205 selects the intra-prediction mode giving the lowest distortion compared to a co-located block on the input frame data 310. The selected intra-prediction mode is encoded in the encoded bitstream 312 by the entropy encoder 324 and may be stored in the memory 206 and/or the HDD 210. In the video decoder 134, the intra-prediction mode is determined at step 1102 by using the entropy decoder 420 to decode syntax elements from the encoded bitstream 312.

At determining step 1104, the processor 205 is used for determining an intra-prediction angle represented by an intra-prediction angle parameter and an inverse angle for the intra-prediction mode for the chroma channel. The angle parameter is determined in accordance with Fig. 8. The determined angle parameter and inverse angle may be stored in the memory 206 and/or the HDD 210.

Then at chroma 4:2:2 test step 1105, the processor 205 is used for determining if the block of predicted samples to be generated is for a chroma channel and the chroma channel is using a 4:2:2 chroma format. If so, control passes to testing step 1106. Otherwise, control passes to generate reference samples step 1124.

Then at the testing step 1106, the processor 205 is used for determining if the predominant direction of the intra-prediction mode selected at step 1102 is vertical or horizontal. The testing step 1106 compares the intra-prediction mode predModeIntra with a threshold value of eighteen (18) and if predModeIntra is greater than or equal to the threshold, the predominant direction is vertical; otherwise the predominant direction is horizontal.

If the predominant direction of the intra-prediction mode is vertical, control passes to a halve angle step 1108. If the predominant direction of the intra-prediction mode is horizontal, control passes to a double angle step 1112. In the following steps 1108, 1110, 1112 and 1114, the method 1100 is used for adjusting the intra-prediction angle due to the 4:2:2 chroma format. The intra-prediction angle is adjusted depending on the predominant direction of the selected intra-prediction mode. For predominantly vertical intra-prediction modes, the angle parameter determined at step 1104 is reduced to compensate for the chroma sample grid. At the halve angle step 1108, the processor 205 is used for halving the intra-prediction angle by halving the angle parameter (e.g. by performing a right shift by one bit) determined at step 1104. Additionally, for intra-prediction modes eighteen (18) to twenty five (25) (where an inverse angle is defined), the step 1108 doubles the inverse angle. Step 1108 results in a new angle that most closely accords with the angle realised on the luma sample grid. For example, the step 1108 may map angle parameters from [0, 2, 5, 9, 13, 17, 21, 26, 32] to [0, 1, 2, 4, 6, 8, 10, 13, 16] and may map inverse angles from [-256, -315, -390, -482, -630, -910, -1638, -4096] to [-512, -630, -780, -964, -1260, -1820, -3276, -8192]. Alternatively, angle parameters may always be quantised downwards and inverse angle parameters upwards and vice versa.

One disadvantage of applying the angle parameter resulting from the halve angle step 1108 to the generate reference samples step 1124 and generate intra-predicted samples step 1126 as described below is that additional possible values for the angle parameter and inverse angle now exist. The additional possible values result in increased complexity in the steps 1124 and 1126. Arrangements providing parallelised implementations for the step 1126, such as described with reference to the sample block generator 1010 of Fig. 10, would thus have increased complexity to support the additional possible values.

The method 1100 continues at quantise angle step 1110, where the processor 205 is used for quantising the halved angle parameter determined at step 1108 to closest pre-existing values for the angle parameter. Also at step 1110, the processor 205 is used for quantising the inverse angle to the closest pre-existing values for the inverse angle.

For intra-prediction mode twenty-five (25), the angle parameter was adjusted from negative two (-2) to negative one (-1) and the inverse angle was doubled from -4096 to - 8192 in the step 1110. The step 1112 may then quantise the angle parameter from negative one (-1) to zero (0). In such a case, the inverse angle is no longer defined for intra-prediction mode twenty five (25) because intra-prediction mode twenty five (25) becomes identical to intra-prediction mode twenty six (26) (purely vertical intra-prediction). Intra-prediction mode twenty six (26) does not require the mechanism for generating reference samples using an inverse angle as was described with reference to Fig. 8B.

In one arrangement, the halve angle step 1108 and the quantise angle step 1110 may be combined into a single table look-up operation for reduced complexity. For example, the combined steps 1108 and 1110 may map angle parameters from [0, 2, 5, 9, 13, 17, 21, 26, 32] to [0, 0, 2, 5, 5, 9, 9, 13, 17] and may map inverse angles from [-256, -315, -390, -482, -630, -910, -1638, -4096] to [-482, -630, -910, -910, -1638, -1638, -4096, N/A].

Other arrangements may produce different mappings due to rounding differences during the halving of the angle parameter. Arrangements which produce different mappings due to rounding differences during the halving of the angle parameter produce different output from the quantisation but retain the property of using only pre-existing values for the angle parameter and inverse angle.

For predominantly horizontal intra-prediction modes, the angle parameter is increased to compensate for the chroma sample grid. At double angle step 1112, the processor 205 is used for doubling the intra-prediction angle by doubling the angle parameter (e.g. by performing a left shift by one bit) determined at step 1104. Step 1112 results in a new angle that closely accords with the angle realised on the luma sample grid. Again, one disadvantage of applying the angle parameter from the double angle step 1112 to the generate reference samples step 1124 and the generate intra-predicted samples step 1126 is that additional possible values for the angle parameter and inverse angle now exist. The additional possible values result in increased complexity in the steps 1124 and 1126. Again, arrangements providing parallelised implementations for step 1126, such as described with reference to the sample block generator 1010 of Fig. 10, would thus have increased complexity to support the additional possible values. Then at quantise angle step 1110, the processor 205 is used for quantising the doubled angle parameter determined at step 1112 to the closest pre-existing value for the angle parameter. Also at step 1114, the processor 205 is used for quantising the inverse angle to the closest existing values for the inverse angle.

A further disadvantage of doubling the angle parameter is that the allowable range for angle parameter is plus/minus thirty-two (+/-32) and doubling the angle parameter results in values falling outside of the allowable range. The allowable range determines the extent of the left reference samples.

Increasing the size of the left reference samples (e.g., 806) results in using samples that are spatially quite distant from the prediction unit (PU) for intra-prediction. The samples used would not be expected to be correlated with the contents of the prediction unit (PU) and thus do not contribute to coding efficiency. Instead, adjustment of the angle parameter and inverse angle is possible.

The method 1100 continues at an angle parameter exceeds maximum test step 1116, where the processor 205 is used to test if the angle parameter (after doubling) is greater than thirty two (32). Alternatively, at step 1116, the processor 205 may test if the angle parameter is greater than sixteen (16) before doubling, which produces an equal result to test if the angle parameter (after doubling) is greater than thirty two (32).

Cases where the maximum angle parameter is exceeded at step 1116 correspond to predominantly horizontal intra-prediction modes two (2) to five (5) and control passes to an adjust angle step 1118. At adjust angle step 1118, the processor 205 is used to set the angle parameter to thirty two (32) and the inverse angle to negative two hundred and fifty six (-256). In cases where the condition of step 1116 is not met, control passes to an angle parameter below minimum test step 1120.

The double angle step 1112, the quantise angle step 1114 and the steps 1116 and 1118 may be combined into a single table look-up operation for reduced complexity. For example, the combined steps 1112 and 1114 may map angle parameters from [0, 2, 5, 9, 13, 17, 21, 26, 32] to [0, 5, 9, 17, 26, 32, 32, 32, 32] and may map inverse angles from [-256, -315, -390, -482, -630, -910, -1638, -4096] to [-256, -256, -256, -256, -315, -482, - 910, -1638].

Other arrangements may produce different mappings due to rounding differences during the halving of the inverse angle. Arrangements which produce different mappings due to rounding differences during the halving of the inverse angle produce different output from the quantisation but retain the property of using only pre-existing values for the angle parameter and inverse angle. For example, some arrangements may always quantise angle parameters downwards and inverse angle parameters upwards and vice versa.

At the angle parameter below minimum test step 1120, the processor 205 is used to test if the angle parameter (after doubling) is lower than negative thirty two (-32). Alternatively, the step 1120 may also test if the angle parameter is less than sixteen 16 prior to doubling, which produces an equal result to testing if the angle parameter (after doubling) is lower than negative thirty two (32). Cases where the low threshold exceeded condition is met correspond to predominantly horizontal intra-prediction modes fifteen (15) to seventeen (17). If the low threshold is exceeded, then the method 1100 proceeds to adjust angle and direction step 1122. Otherwise, the method 1100 proceeds to step 1124.

At step 1122, the processor 205 is used for adjusting the angle parameter, the inverse angle and the threshold. The step 1122 sets the angle parameter and inverse angle to correspond to the angle parameter and inverse angle of intra-prediction modes eighteen (18) to twenty (20). The step 1122 also adjusts the threshold from eighteen (18) to fifteen (15). The intra-prediction modes eighteen (18) to twenty (20) are predominantly vertical and thus the adjusted threshold results in the direction of the intra-prediction modes fifteen (15), sixteen (16) and seventeen (17) changing from predominantly horizontal to predominantly vertical.

As described above, the change threshold indicates the boundary between the predominantly horizontal intra-prediction modes and the predominantly vertical intra-prediction modes. The change threshold has a value of eighteen (18) for the luma sample grid (and for a chroma channel when a chroma format other than 4:2:2 is in use). For a chroma channel when a 4:2:2 chroma format is in use, the change threshold has a value of fifteen (15). As also described above, the change threshold may be modified if the magnitude of the adjusted intra-predication angle parameter exceeds a predetermined value (e.g., 32).

At generate reference samples step 1124, the reference sample generator 1008, under execution of the processor 205, generates reference samples using the angle parameter and inverse angle (if defined). The adjusted threshold may also be used for generating reference samples.

Then at generate intra-predicted samples step 1126, the sample block generator 1010, under execution of the processor 205, is used for generating prediction unit (PU) 464, in the form of an array of intra-predicted samples, using the reference samples determined at step 1124 and the angle parameter 1024. The intra-predicted samples are generated at step 1126 using the vertical intra-prediction mode according to the intra-prediction angle adjusted at either of steps 1118 and 1122, and according to the change threshold described above.

Fig. 12 shows a table for converting an intra-prediction mode (predModeIntra) into an intra-prediction angle (intraPredAngle) and an inverse angle (invAngle), with quantisation of the intra-prediction angle and the inverse angle. The table of Fig. 12 accords with the outcome (i.e. the angle parameter value and the inverse angle value input to the step 1124) from step 1130 of Fig. 11, with the steps 1120 and 1122 omitted. Step 1130 (excluding steps 1120 and 1122) may be alternatively be replaced by a table look-up operating using the table of Fig. 12 to determine the angle parameter and inverse angle for an intra-prediction mode. Example 'working draft' text for arrangements that accord with Fig. 12 is included in Appendix A.

Fig. 13 shows a table for converting of an intra-prediction mode (predModeIntra) into an intra-prediction angle (intraPredAngle) and an inverse angle (invAngle), with quantisation of the intra-prediction angle and the inverse angle and a boundary, or threshold, between horizontal and vertical intra-prediction modes determined by a block type. The table of Fig. 13 accords with the outcome (i.e. the angle parameter value and the inverse angle value input to the step 1124) from step 1130 of Fig. 11. Step 1130 may be replaced by a table look-up operating using the table of Fig. 13 to determine the angle parameter and inverse angle for an intra-prediction mode. Example 'working draft' text for arrangements that accord with Fig. 13 is included in Appendix B.

Fig. 14 shows a table for converting an intra-prediction mode (predModeIntra) into an intra-prediction angle (intraPredAngle) and an inverse angle (invAngle), with an alternative quantisation of the intra-prediction angle and the inverse angle. The table of Fig. 14 accords with the outcome (i.e. the angle parameter value and the inverse angle value input to the step 1124) from step 1130 of Fig. 11, with the steps 1120 and 1122 omitted and an alternative mapping in the halve angle step 1108. The alternative mapping maps angle parameters of [0, 2, 5, 9, 13, 17, 21, 26, 32] to angle parameters of [0, 2, 2, 5, 5, 9, 9, 13, 17] (assuming that the positive/negative symmetry is exploited, positive values for angle parameters are listed, however the alternative mapping may explicitly be extended to include negative angle parameters). In one arrangement of the method 1100, the step 1130 (excluding steps 1120 and 1122) may be replaced by a table look-up operating using the table of Fig. 14 to determine the angle parameter and inverse angle for an intra-prediction mode. Example 'working draft' text for arrangements that accord with Fig. 14 is included in Appendix C.

Fig. 15 shows a table for converting of an intra-prediction mode (predModeIntra) into an intra-prediction angle (intraPredAngle) and an inverse angle (invAngle), with an alternative quantisation of the intra-prediction angle and the inverse angle and a boundary, or threshold, between horizontal and vertical intra-prediction modes determined by a block type. The table of Fig. 15 accords with the outcome (i.e. the angle parameter value and the inverse angle value input to the step 1124) from step 1130 of Fig. 11 with an alternative mapping in the halve angle step 1108. The alternative mapping maps angle parameters of [0, 2, 5, 9, 13, 17, 21, 26, 32] to angle parameters of [0, 2, 2, 5, 5, 9, 9, 13, 17] (assuming that the positive/negative symmetry is exploited, positive values for angle parameters are listed, however the alternative mapping may explicitly be extended to include negative angle parameters). In one arrangement of the method 1100, the step 1130 may be replaced by a table look-up operating using the table of Fig. 15 to determine the angle parameter and inverse angle for an intra-prediction mode. Example 'working draft' text for arrangements that accord with Fig. 15 is included in Appendix D.

Arrangements that accord with either of the tables of Fig. 14 and Fig. 15 have the advantage that the range of intra-prediction modes for which an inverse angle is defined (i.e., intra-prediction modes eleven to twenty-five) is the same between the cases of the chroma channel with a 4:2:2 chroma format and the luma channel or non-4:2:2 chroma format cases. Arrangements that accord with either of the tables of Fig. 14 and Fig. 15 avoid the need to introduce a condition check to determine whether an inverse angle should be applied in the generate reference samples step 1124.

Arrangements that accord with any of the tables of Figs. 12-15 have the advantage that a only single table look-up is required to determine the angle parameter and inverse angle for any intra-prediction mode and no further intermediate (or 'adjusted') parameters are required.

In one arrangement, the intra-prediction mode may be remapped to an adjusted intra-prediction mode, prior to determining the angle parameter and the inverse angle. The adjusted intra-prediction mode is used in the steps 1104-1126 of the method 1100. Remapping the intra-prediction mode to an adjusted intra-prediction mode introduces an intermediate (i.e. 'adjusted') intra-prediction mode that results from the remapping operation. Remapping the intra-prediction mode to an adjusted intra-prediction mode also introduces an additional table to remap the intra-prediction mode to an adjusted intra-prediction mode and an additional table look-up is required to perform the remapping (e.g., as part of the step 1102). In arrangements where the intra-prediction mode is remapped to an adjusted intra-prediction mode, further adjustment of the angle parameter and the inverse angle is not required and thus the steps 1105-1122 are not required.

Arrangements described herein permit implementations of the video encoder 114 and the video decoder 134 to support the 4:2:2 chroma format with reduced complexity, while maintaining high coding efficiency for intra-predicted prediction units (PUs).

INDUSTRIAL APPLICABILITY

The arrangements described are applicable to the computer and data processing industries and particularly for the digital signal processing for the encoding a decoding of signals such as video signals.

In the context of this specification, the word "comprising" means "including principally but not necessarily solely" or "having" or "including", and not "consisting only of". Variations of the word "comprising", such as "comprise" and "comprises" have correspondingly varied meanings.

**APPENDIX A**

**IMPLEMENTATION OF GENERATING THE INTRA-PREDICTED SAMPLES**

8.4.4.2.6 Specification of intra prediction mode in the range of INTRA_ANGULAR2.. INTRA ANGULAR34

Inputs to this process are:

- the intra prediction mode predModeIntra,
- the neighbouring samples p[x][y], with x = -1, y = -1..nTbS * 2 - 1 and x = 0..nTbS * 2 - 1, y = -1,
- a variable nTbS specifying the transform block size,
- a variable cIdx specifying the colour component of the current block.

Outputs of this process are the predicted samples predSamples[x][y], with x, y = 0..nTbS - 1.

Figure 8-2 illustrates the total 33 intra angles and Table 8-4 specifies the mapping table between predModeIntra and the angle parameter intraPredAngle.

Figure 8-2 – Intra prediction angle definition (informative)

Table 8-4 - Specification of intraPredAngle

| predModeIntra | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | -32 | -32 | -32 |
| predModeIntra | 18 | 19 | 20 | 21 | 22 | 23 | 24 | 25 | 26 | 27 | 28 | 29 | 30 | 31 | 32 | 33 | 34 |
| intraPredAngle | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -17 | -13 | -9 | -9 | -5 | -5 | -2 | 0 | 0 | 0 | 2 | 5 | 5 | 9 | 9 | 13 | 17 |

Table 8-5 further specifies the mapping table between predModeIntra and the inverse angle parameter invAngle.

Table 8-5 - Specification of invAngle

| predModeIntra | 11 | 12 | 13 | 14 | 15 | 16 | 17 | 18 |
|---|---|---|---|---|---|---|---|---|
| invAngle | -4096 | -1638 | -910 | -630 | -482 | -390 | -315 | -256 |
| invAngle (4:2:2 chroma) | -1638 | -910 | -482 | -315 | -256 | -256 | -256 | -482 |
| predModeIntra | 19 | 20 | 21 | **22** | **23** | 24 | **25** | **26** |
| invAngle | -315 | -390 | -482 | -630 | -910 | -1638 | -4096 | - |
| invAngle (4:2:2 chroma) | -630 | -910 | -910 | -1638 | -1638 | -4096 | - | - |

- If predModeIntra is equal or greater than 18 when ChromaArrayType is not equal to 2 or cIdx is equal to 0, or if predModeIntra is equal or greater than 15 when ChromaArrayType is equal to 2 and cIdx is not equal to 0, the following ordered steps apply:

   1. The reference sample array ref[x] is specified as follows:

   - The following applies:

$$\text{ref}[\,x\,] = p[\,-1 + x\,][\,-1\,], \text{ with } x = 0..nTbS \quad (8\text{-}47)$$

- If intraPredAngle is less than 0, the main reference sample array is extended as follows:

  - When (nTbS * intraPredAngle) >> 5 is less than -1,

$$\text{ref}[\,x\,] = p[\,-1\,][\,-1 + (\,(\,x * \text{invAngle} + 128\,) \gg 8\,)\,],$$
$$\text{with } x = -1..(\,nTbS * \text{intraPredAngle}\,) \gg 5 \quad (8\text{-}48)$$

- Otherwise,

$$\text{ref}[\,x\,] = p[\,-1 + x\,][\,-1\,], \text{ with } x = nTbS + 1..2 * nTbS \quad (8\text{-}49)$$

2. The values of the prediction samples predSamples[x][y], with x, y = 0..nTbS - 1 are derived as follows:

  a. The index variable iIdx and the multiplication factor iFact are derived as follows:

$$\text{iIdx} = (\,(\,y + 1\,) * \text{intraPredAngle}\,) \gg 5 \quad (8\text{-}50)$$

$$\text{iFact} = (\,(\,y + 1\,) * \text{intraPredAngle}\,) \,\&\, 31 \quad (8\text{-}51)$$

  b. Depending on the value of iFact, the following applies:

  - If iFact is not equal to 0, the value of the prediction samples predSamples[x][y] is derived as follows:

$$\text{predSamples}[\,x\,][\,y\,] =$$
$$(\,(\,32 - \text{iFact}\,) * \text{ref}[\,x + \text{iIdx} + 1\,] + \text{iFact} * \text{ref}[\,x + \text{iIdx} + 2\,] + 16\,) \gg 5$$
$$(8\text{-}52)$$

  - Otherwise, the value of the prediction samples predSamples[x][y] is derived as follows:

$$\text{predSamples}[\,x\,][\,y\,] = \text{ref}[\,x + \text{iIdx} + 1\,] \quad (8\text{-}53)$$

  c. When predModeIntra is equal to 26 (vertical), cIdx is equal to 0 and nTbS is less than 32, the following filtering applies with x = 0, y = 0..nTbS - 1:

$$\text{predSamples}[\,x\,][\,y\,] = \text{Clip1}_Y(\,p[\,x\,][\,-1\,] + (\,(\,p[\,-1\,][\,y\,] - p[\,-1\,][\,-1\,]\,) \gg 1\,)\,)$$
$$(8\text{-}54)$$

- Otherwise, the following ordered steps apply:

  1. The reference sample array ref[x] is specified as follows:

  - The following applies:

$$\text{ref}[\,x\,] = p[\,-1\,][\,-1 + x\,], \text{ with } x = 0..nTbS \quad (8\text{-}55)$$

  - If intraPredAngle is less than 0, the main reference sample array is extended as follows:

- When (nTbS * intraPredAngle) >> 5 is less than -1,

$$\text{ref}[\,x\,] = p[\,-1 + (\,(\,x \ast \text{invAngle} + 128\,) >> 8\,)\,][\,-1\,],$$
$$\text{with } x = -1..(\,\text{nTbS} \ast \text{intraPredAngle}\,) >> 5 \qquad (8\text{-}56)$$

- Otherwise,

$$\text{ref}[\,x\,] = p[\,-1\,][\,-1 + x\,], \text{with } x = \text{nTbS} + 1..2 \ast \text{nTbS} \qquad (8\text{-}57)$$

2. The values of the prediction samples predSamples[x][y], with x, y = 0..nTbS - 1 are derived as follows:

a. The index variable iIdx and the multiplication factor iFact are derived as follows:

$$\text{iIdx} = (\,(\,x + 1\,) \ast \text{intraPredAngle}\,) >> 5 \qquad (8\text{-}58)$$

$$\text{iFact} = (\,(\,x + 1\,) \ast \text{intraPredAngle}\,) \,\&\, 31 \qquad (8\text{-}59)$$

b. Depending on the value of iFact, the following applies:

- If iFact is not equal to 0, the value of the prediction samples predSamples[x][y] is derived as follows:

$$\text{predSamples}[\,x\,][\,y\,] =$$
$$(\,(\,32 - \text{iFact}\,) \ast \text{ref}[\,y + \text{iIdx} + 1\,] + \text{iFact} \ast \text{ref}[\,y + \text{iIdx} + 2\,] + 16\,) >> 5$$
$$(8\text{-}60)$$

- Otherwise, the value of the prediction samples predSamples[x][y] is derived as follows:

$$\text{predSamples}[\,x\,][\,y\,] = \text{ref}[\,y + \text{iIdx} + 1\,] \qquad (8\text{-}61)$$

c. When predModeIntra is equal to 10 (horizontal), cIdx is equal to 0 and nTbS is less than 32 the following filtering applies with x = 0..nTbS - 1, y = 0:

$$\text{predSamples}[\,x\,][\,y\,] = \text{Clip1}_Y(\,p[\,-1\,][\,y\,] + (\,(\,p[\,x\,][\,-1\,] - p[\,-1\,][\,-1\,]\,) >> 1\,)\,)$$
$$(8\text{-}62)$$

End Appendix A

**APPENDIX B**

**ALTERNATIVE IMPLEMENTATION OF GENERATING THE INTRA-PREDICTED SAMPLES**

8.4.4.2.6 Specification of intra prediction mode in the range of INTRA_ANGULAR2.. INTRA_ANGULAR34

Inputs to this process are:

- the intra prediction mode predModeIntra,
- the neighbouring samples p[x][y], with x = -1, y = -1..nTbS * 2 - 1 and x = 0..nTbS * 2 - 1, y = -1,
- a variable nTbS specifying the transform block size,
- a variable cIdx specifying the colour component of the current block.

Outputs of this process are the predicted samples predSamples[x][y], with x, y = 0..nTbS - 1.

Figure 8-2 illustrates the total 33 intra angles and Table 8-4 specifies the mapping table between predModeIntra and the angle parameter intraPredAngle.

**Figure 8-2 – Intra prediction angle definition (informative)**

**Table 8-4 - Specification of intraPredAngle**

| predModeIntra | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | -32 | -26 | -21 |
| predModeIntra | 18 | 19 | 20 | 21 | 22 | 23 | 24 | 25 | 26 | 27 | 28 | 29 | 30 | 31 | 32 | 33 | 34 |
| intraPredAngle | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -17 | -13 | -9 | -9 | -5 | -5 | -2 | 0 | 0 | 0 | 2 | 5 | 5 | 9 | 9 | 13 | 17 |

Table 8-5 further specifies the mapping table between predModeIntra and the inverse angle parameter invAngle.

**Table 8-5 - Specification of invAngle**

| predModeIntra | 11 | 12 | 13 | 14 | 15 | 16 | 17 | 18 |
|---|---|---|---|---|---|---|---|---|
| invAngle | -4096 | -1638 | -910 | -630 | -482 | -390 | -315 | -256 |
| invAngle (4:2:2 chroma) | -1638 | -910 | -482 | -315 | -256 | -315 | -390 | -482 |
| predModeIntra | 19 | 20 | 21 | 22 | 23 | 24 | 25 | 26 |
| invAngle | -315 | -390 | -482 | -630 | -910 | -1638 | -4096 | - |
| invAngle (4:2:2 chroma) | -630 | -910 | -910 | -1638 | -1638 | -4096 | - | - |

- If predModeIntra is equal or greater than 18 when ChromaArrayType is not equal to 2 or cIdx is equal to 0, or if predModeIntra is equal or greater than 15 when
ChromaArrayType is equal to 2 and cIdx is not equal to 0, the following ordered steps apply:

  3. The reference sample array ref[x] is specified as follows:

- The following applies:

$$\text{ref}[\,x\,] = p[\,-1 + x\,][\,-1\,], \text{ with } x = 0..nTbS \quad (8\text{-}47)$$

- If intraPredAngle is less than 0, the main reference sample array is extended as follows:

    - When (nTbS * intraPredAngle) >> 5 is less than -1,

$$\text{ref}[\,x\,] = p[\,-1\,][\,-1 + (\,(\,x * \text{invAngle} + 128\,) >> 8\,)\,],$$
$$\text{with } x = -1..(\,nTbS * \text{intraPredAngle}\,) >> 5 \quad (8\text{-}48)$$

- Otherwise,

$$\text{ref}[\,x\,] = p[\,-1 + x\,][\,-1\,], \text{ with } x = nTbS + 1..2 * nTbS \quad (8\text{-}49)$$

4. The values of the prediction samples predSamples[x][y], with x, y = 0..nTbS - 1 are derived as follows:

    a. The index variable iIdx and the multiplication factor iFact are derived as follows:

$$\text{iIdx} = (\,(\,y + 1\,) * \text{intraPredAngle}\,) >> 5 \quad (8\text{-}50)$$

$$\text{iFact} = (\,(\,y + 1\,) * \text{intraPredAngle}\,) \,\&\, 31 \quad (8\text{-}51)$$

    b. Depending on the value of iFact, the following applies:

    - If iFact is not equal to 0, the value of the prediction samples predSamples[x][y] is derived as follows:

$$\text{predSamples}[\,x\,][\,y\,] =$$
$$(\,(\,32 - \text{iFact}\,) * \text{ref}[\,x + \text{iIdx} + 1\,] + \text{iFact} * \text{ref}[\,x + \text{iIdx} + 2\,] + 16\,) >> 5$$
$$(8\text{-}52)$$

    - Otherwise, the value of the prediction samples predSamples[x][y] is derived as follows:

$$\text{predSamples}[\,x\,][\,y\,] = \text{ref}[\,x + \text{iIdx} + 1\,] \quad (8\text{-}53)$$

    c. When predModeIntra is equal to 26 (vertical), cIdx is equal to 0 and nTbS is less than 32 the following filtering applies with x = 0, y = 0..nTbS - 1:

$$\text{predSamples}[\,x\,][\,y\,] = \text{Clip1}_Y(\,p[\,x\,][\,-1\,] + (\,(\,p[\,-1\,][\,y\,] - p[\,-1\,][\,-1\,]\,) >> 1\,)\,)$$
$$(8\text{-}54)$$

- Otherwise, the following ordered steps apply:

    3. The reference sample array ref[x] is specified as follows:

    - The following applies:

$$\text{ref}[\,x\,] = p[\,-1\,][\,-1 + x\,], \text{ with } x = 0..nTbS \quad (8\text{-}55)$$

- If intraPredAngle is less than 0, the main reference sample array is extended as follows:

  - When (nTbS * intraPredAngle) >> 5 is less than -1,

$$\mathrm{ref}[\,x\,] = p[\,-1 + (\,(\,x * \mathrm{invAngle} + 128\,) >> 8\,)\,][\,-1\,],$$
$$\text{with } x = -1..(\,\mathrm{nTbS} * \mathrm{intraPredAngle}\,) >> 5 \qquad (8\text{-}56)$$

  - Otherwise,

$$\mathrm{ref}[\,x\,] = p[\,-1\,][\,-1 + x\,], \text{ with } x = \mathrm{nTbS} + 1..2 * \mathrm{nTbS} \qquad (8\text{-}57)$$

4. The values of the prediction samples predSamples[x][y], with x, y = 0..nTbS - 1 are derived as follows:

  d. The index variable iIdx and the multiplication factor iFact are derived as follows:

$$\mathrm{iIdx} = (\,(\,x + 1\,) * \mathrm{intraPredAngle}\,) >> 5 \qquad (8\text{-}58)$$

$$\mathrm{iFact} = (\,(\,x + 1\,) * \mathrm{intraPredAngle}\,) \,\&\, 31 \qquad (8\text{-}59)$$

  e. Depending on the value of iFact, the following applies:

  - If iFact is not equal to 0, the value of the prediction samples predSamples[x][y] is derived as follows:

$$\mathrm{predSamples}[\,x\,][\,y\,] =$$
$$(\,(\,32 - \mathrm{iFact}\,) * \mathrm{ref}[\,y + \mathrm{iIdx} + 1\,] + \mathrm{iFact} * \mathrm{ref}[\,y + \mathrm{iIdx} + 2\,] + 16\,) >> 5$$
$$(8\text{-}60)$$

  - Otherwise, the value of the prediction samples predSamples[x][y] is derived as follows:

$$\mathrm{predSamples}[\,x\,][\,y\,] = \mathrm{ref}[\,y + \mathrm{iIdx} + 1\,] \qquad (8\text{-}61)$$

  f. When predModeIntra is equal to 10 (horizontal), cIdx is equal to 0 and nTbS is less than 32, the following filtering applies with x = 0..nTbS - 1, y = 0:

$$\mathrm{predSamples}[\,x\,][\,y\,] = \mathrm{Clip1}_Y(\,p[\,-1\,][\,y\,] + (\,(\,p[\,x\,][\,-1\,] - p[\,-1\,][\,-1\,]\,) >> 1\,)\,)$$
$$(8\text{-}62)$$

End Appendix B

**APPENDIX** C

**ALTERNATIVE IMPLEMENTATION OF GENERATING THE INTRA-PREDICTED SAMPLES**

8.4.4.2.6 Specification of intra prediction mode in the range of INTRA ANGULAR2.. INTRA ANGULAR34

Inputs to this process are:

- the intra prediction mode predModeIntra,
- the neighbouring samples p[x][y], with x = -1, y = -1..nTbS * 2 - 1 and x = 0..nTbS * 2 - 1, y = -1,
- a variable nTbS specifying the transform block size,

- a variable cIdx specifying the colour component of the current block.

Outputs of this process are the predicted samples predSamples[x][y], with x, y = 0..nTbS - 1.

Figure 8-2 illustrates the total 33 intra angles and Table 8-4 specifies the mapping table between predModeIntra and the angle parameter intraPredAngle.

**Figure 8-2 – Intra prediction angle definition (informative)**

**Table 8-4 - Specification of intraPredAngle**

| predModeIntra | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | -32 | -32 | -32 |
| predModeIntra | 18 | 19 | 20 | 21 | 22 | 23 | 24 | 25 | 26 | 27 | 28 | 29 | 30 | 31 | 32 | 33 | 34 |
| intraPredAngle | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -17 | -13 | -9 | -9 | -5 | -5 | -2 | -2 | 0 | 2 | 2 | 5 | 5 | 9 | 9 | 13 | 17 |

Table 8-5 further specifies the mapping table between predModeIntra and the inverse angle parameter invAngle.

**Table 8-5 - Specification of invAngle**

| predModeIntra | 11 | 12 | 13 | 14 | 15 | 16 | 17 | 18 |
|---|---|---|---|---|---|---|---|---|
| invAngle | -4096 | -1638 | -910 | -630 | -482 | -390 | -315 | -256 |
| invAngle (4:2:2 chroma) | -1638 | -910 | -482 | -315 | -256 | -256 | -256 | -482 |
| predModeIntra | 19 | 20 | 21 | 22 | 23 | 24 | 25 | 26 |
| invAngle | -315 | -390 | -482 | -630 | -910 | -1638 | -4096 | - |
| invAngle (4:2:2 chroma) | -630 | -910 | -910 | -1638 | -1638 | -4096 | -4096 | - |

- If predModeIntra is equal or greater than 18 when ChromaArrayType is not equal to 2 or cIdx is equal to 0, or if predModeIntra is equal or greater than 15 when ChromaArrayType is equal to 2 and cIdx is not equal to 0, the following ordered steps apply:

5. The reference sample array ref[x] is specified as follows:

- The following applies:

$$ref[\,x\,] = p[\,-1 + x\,][\,-1\,], \text{ with } x = 0..nTbS \quad (8\text{-}47)$$

- If intraPredAngle is less than 0, the main reference sample array is extended as follows:

  - When (nTbS * intraPredAngle) >> 5 is less than -1,

$$ref[\,x\,] = p[\,-1\,][\,-1 + ((\,x * invAngle + 128\,) >> 8\,)\,],$$
$$\text{with } x = -1..(\,nTbS * intraPredAngle\,) >> 5 \quad (8\text{-}48)$$

  - Otherwise,

$$ref[\,x\,] = p[\,-1 + x\,][\,-1\,], \text{ with } x = nTbS + 1..2 * nTbS \quad (8\text{-}49)$$

6. The values of the prediction samples predSamples[x][y], with x, y = 0..nTbS - 1 are derived as follows:

  a. The index variable iIdx and the multiplication factor iFact are derived as follows:

$$iIdx = ((\,y + 1\,) * intraPredAngle\,) >> 5 \quad (8\text{-}50)$$

$$iFact = ((\,y + 1\,) * intraPredAngle\,) \,\&\, 31 \quad (8\text{-}51)$$

  b. Depending on the value of iFact, the following applies:

  - If iFact is not equal to 0, the value of the prediction samples predSamples[x][y] is derived as follows:

$$predSamples[\,x\,][\,y\,] =$$
$$((\,32 - iFact\,) * ref[\,x + iIdx + 1\,] + iFact * ref[\,x + iIdx + 2\,] + 16\,) >> 5$$
$$(8\text{-}52)$$

  - Otherwise, the value of the prediction samples predSamples[x][y] is derived as follows:

$$predSamples[\,x\,][\,y\,] = ref[\,x + iIdx + 1\,] \quad (8\text{-}53)$$

  c. When predModeIntra is equal to 26 (vertical), cIdx is equal to 0 and nTbS is less than 32, the following filtering applies with x = 0, y = 0..nTbS - 1:

$$predSamples[\,x\,][\,y\,] = Clip1_Y(\,p[\,x\,][\,-1\,] + ((\,p[\,-1\,][\,y\,] - p[\,-1\,][\,-1\,]\,) >> 1\,)\,)$$
$$(8\text{-}54)$$

- Otherwise, the following ordered steps apply:

  5. The reference sample array ref[x] is specified as follows:

  - The following applies:

$$\text{ref}[\,x\,] = p[\,-1\,][\,-1 + x\,], \text{ with } x = 0..\text{nTbS} \quad (8\text{-}55)$$

- If intraPredAngle is less than 0, the main reference sample array is extended as follows:

  - When (nTbS * intraPredAngle) >> 5 is less than -1,

$$\text{ref}[\,x\,] = p[\,-1 + (\,(\,x * \text{invAngle} + 128\,) >> 8\,)\,][\,-1\,],$$
$$\text{with } x = -1..(\,\text{nTbS} * \text{intraPredAngle}\,) >> 5 \quad (8\text{-}56)$$

  - Otherwise,

$$\text{ref}[\,x\,] = p[\,-1\,][\,-1 + x\,], \text{ with } x = \text{nTbS} + 1..2 * \text{nTbS} \quad (8\text{-}57)$$

6. The values of the prediction samples predSamples[x][y], with x, y = 0..nTbS - 1 are derived as follows:

  g. The index variable iIdx and the multiplication factor iFact are derived as follows:

$$\text{iIdx} = (\,(\,x + 1\,) * \text{intraPredAngle}\,) >> 5 \quad (8\text{-}58)$$

$$\text{iFact} = (\,(\,x + 1\,) * \text{intraPredAngle}\,) \,\&\, 31 \quad (8\text{-}59)$$

  h. Depending on the value of iFact, the following applies:

  - If iFact is not equal to 0, the value of the prediction samples predSamples[x][y] is derived as follows:

$$\text{predSamples}[\,x\,][\,y\,] =$$
$$(\,(\,32 - \text{iFact}\,) * \text{ref}[\,y + \text{iIdx} + 1\,] + \text{iFact} * \text{ref}[\,y + \text{iIdx} + 2\,] + 16\,) >> 5$$
$$(8\text{-}60)$$

  - Otherwise, the value of the prediction samples predSamples[x][y] is derived as follows:

$$\text{predSamples}[\,x\,][\,y\,] = \text{ref}[\,y + \text{iIdx} + 1\,] \quad (8\text{-}61)$$

  i. When predModeIntra is equal to 10 (horizontal), cIdx is equal to 0 and nTbS is less than 32, the following filtering applies with x = 0..nTbS - 1, y = 0:

$$\text{predSamples}[\,x\,][\,y\,] = \text{Clip1}_Y(\,p[\,-1\,][\,y\,] + (\,(\,p[\,x\,][\,-1\,] - p[\,-1\,][\,-1\,]\,) >> 1\,)\,)$$
$$(8\text{-}62)$$

End Appendix C

## APPENDIX D

### ALTERNATIVE IMPLEMENTATION OF GENERATING THE INTRA-PREDICTED SAMPLES

8.4.4.2.6 Specification of intra prediction mode in the range of INTRA_ANGULAR2.. INTRA ANGULAR34

Inputs to this process are:

- the intra prediction mode predModeIntra,
- the neighbouring samples p[x][y], with x = -1, y = -1..nTbS * 2 - 1 and x = 0..nTbS * 2 - 1, y = -1,
- a variable nTbS specifying the transform block size,
- a variable cIdx specifying the colour component of the current block.

Outputs of this process are the predicted samples predSamples[x][y], with x, y = 0..nTbS - 1.

Figure 8-2 illustrates the total 33 intra angles and Table 8-4 specifies the mapping table between predModeIntra and the angle parameter intraPredAngle.

**Figure 8-2 – Intra prediction angle definition (informative)**

**Table 8-4 - Specification of intraPredAngle**

| predModeIntra | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | -32 | -26 | -21 |
| predModeIntra | 18 | 19 | 20 | 21 | 22 | 23 | 24 | 25 | 26 | 27 | 28 | 29 | 30 | 31 | 32 | 33 | 34 |
| intraPredAngle | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -17 | -13 | -9 | -9 | -5 | -5 | -2 | -2 | 0 | 2 | 2 | 5 | 5 | 9 | 9 | 13 | 17 |

Table 8-5 further specifies the mapping table between predModeIntra and the inverse angle parameter invAngle.

**Table 8-5 - Specification of invAngle**

| predModeIntra | 11 | 12 | 13 | 14 | 15 | 16 | 17 | 18 |
|---|---|---|---|---|---|---|---|---|
| invAngle | -4096 | -1638 | -910 | -630 | -482 | -390 | -315 | -256 |
| invAngle (4:2:2 chroma) | -1638 | -910 | -482 | -315 | -256 | -315 | -390 | -482 |
| predModeIntra | 19 | 20 | 21 | 22 | 23 | 24 | 25 | 26 |
| invAngle | -315 | -390 | -482 | -630 | -910 | -1638 | -4096 | - |
| invAngle (4:2:2 chroma) | -630 | -910 | -910 | -1638 | -1638 | -4096 | -4096 | - |

- If predModeIntra is equal or greater than 18 when ChromaArrayType is not equal to 2 or cIdx is equal to 0, or if predModelntra is equal or greater than 15 when
ChromaArrayType is equal to 2 and cIdx is not equal to 0, the following ordered steps apply:

7. The reference sample array ref[x] is specified as follows:

- The following applies:

$$ref[\ x\ ] = p[\ -1 + x\ ][\ -1\ ], \text{ with } x = 0..nTbS \quad (8\text{-}47)$$

- If intraPredAngle is less than 0, the main reference sample array is extended as follows:

  - When (nTbS * intraPredAngle) >> 5 is less than -1,

$$ref[\ x\ ] = p[\ -1\ ][\ -1 + (\ (\ x * invAngle + 128\ )\ >>\ 8\ )\ ],$$
$$\text{with } x = -1..(\ nTbS\ *\ intraPredAngle\ )\ >>\ 5 \quad (8\text{-}48)$$

- Otherwise,

$$ref[\ x\ ] = p[\ -1 + x\ ][\ -1\ ], \text{ with } x = nTbS + 1..2 * nTbS \quad (8\text{-}49)$$

8. The values of the prediction samples predSamples[x][y], with x, y = 0..nTbS - 1 are derived as follows:

  a. The index variable iIdx and the multiplication factor iFact are derived as follows:

$$iIdx = (\ (\ y + 1\ )\ *\ intraPredAngle\ )\ >>\ 5 \quad (8\text{-}50)$$

$$iFact = (\ (\ y + 1\ )\ *\ intraPredAngle\ )\ \&\ 31 \quad (8\text{-}51)$$

  b. Depending on the value of iFact, the following applies:

  - If iFact is not equal to 0, the value of the prediction samples predSamples[x][y] is derived as follows:

$$predSamples[\ x\ ][\ y\ ] =$$
$$(\ (\ 32 - iFact\ )\ *\ ref[\ x + iIdx + 1\ ] + iFact\ *\ ref[\ x + iIdx + 2\ ] + 16\ )\ >>\ 5$$
$$(8\text{-}52)$$

  - Otherwise, the value of the prediction samples predSamples[x][y] is derived as follows:

$$predSamples[\ x\ ][\ y\ ] = ref[\ x + iIdx + 1\ ] \quad (8\text{-}53)$$

  c. When predModelntra is equal to 26 (vertical), cIdx is equal to 0 and nTbS is less than 32, the following filtering applies with x = 0, y = 0..nTbS - 1:

$$predSamples[\ x\ ][\ y\ ] = Clip1_Y(\ p[\ x\ ][\ -1\ ] + (\ (\ p[\ -1\ ][\ y\ ] - p[\ -1\ ][\ -1\ ]\ )\ >>\ 1\ )\ )$$
$$(8\text{-}54)$$

- Otherwise, the following ordered steps apply:

7. The reference sample array ref[x] is specified as follows:

- The following applies:

$$\mathrm{ref[\ x\ ]} = p[\ -1\ ][\ -1 + x\ ], \text{ with } x = 0..nTbS \quad (8\text{-}55)$$

- If intraPredAngle is less than 0, the main reference sample array is extended as follows:

- When (nTbS * intraPredAngle) >> 5 is less than -1,

$$\mathrm{ref[\ x\ ]} = p[\ -1 + ((\ x * \mathrm{invAngle} + 128\ )\ \gg\ 8\ )][\ -1\ ],$$
$$\text{with } x = -1..(\ nTbS * intraPredAngle\ )\ \gg\ 5 \quad (8\text{-}56)$$

- Otherwise,

$$\mathrm{ref[\ x\ ]} = p[\ -1\ ][\ -1 + x\ ], \text{ with } x = nTbS + 1..2 * nTbS \quad (8\text{-}57)$$

8. The values of the prediction samples predSamples[x][y], with x, y = 0..nTbS - 1 are derived as follows:

j. The index variable iIdx and the multiplication factor iFact are derived as follows:

$$\mathrm{iIdx} = ((\ x + 1\ ) * intraPredAngle\ )\ \gg\ 5 \quad (8\text{-}58)$$

$$\mathrm{iFact} = ((\ x + 1\ ) * intraPredAngle\ )\ \&\ 31 \quad (8\text{-}59)$$

k. Depending on the value of iFact, the following applies:

- If iFact is not equal to 0, the value of the prediction samples predSamples[x][y] is derived as follows:

$$\mathrm{predSamples[\ x\ ][\ y\ ]} =$$
$$((\ 32 - iFact\ ) * \mathrm{ref[\ y + iIdx + 1\ ]} + iFact * \mathrm{ref[\ y + iIdx + 2\ ]} + 16\ )\ \gg\ 5$$
$$(8\text{-}60)$$

- Otherwise, the value of the prediction samples predSamples[x][y] is derived as follows:

$$\mathrm{predSamples[\ x\ ][\ y\ ]} = \mathrm{ref[\ y + iIdx + 1\ ]} \quad (8\text{-}61)$$

l. When predModeIntra is equal to 10 (horizontal), cIdx is equal to 0 and nTbS is less than 32, the following filtering applies with x = 0..nTbS - 1, y = 0:

$$\mathrm{predSamples[\ x\ ][\ y\ ]} = \mathrm{Clip1_Y}(\ p[\ -1\ ][\ y\ ] + ((\ p[\ x\ ][\ -1\ ] - p[\ -1\ ][\ -1\ ]\ )\ \gg\ 1\ )\ )$$
$$(8\text{-}62)$$

End Appendix D

**Claims**

1. A method of generating intra-predicted samples for a chroma channel of a video bitstream configured for a 4:2:2 chroma format, the method comprising:

selecting intra-prediction reference samples by using values determined from a look-up table comprising values relating to intra-prediction modes and intra-prediction angle parameters; and

generating intra-predicted samples using the selected intra-prediction reference samples and values determined from the look-up table; **characterised in that** the look-up table is populated as follows:

| Horizontal modes | | | | | | | | | | | | | | | | | |
|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | | | |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | | | |

| Vertical modes | | | | | | | | | | | | | | | | | | | | |
|---|---|---|---|---|---|---|---|---|---|---|---|---|---|---|---|---|---|---|---|---|
| predModeIntra | 15 | 16 | 17 | 18 | 19 | 20 | 21 | 22 | 23 | 24 | 25 | 26 | 27 | 28 | 29 | 30 | 31 | 32 | 33 | 34 |
| intraPredAngle | | | | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | -2 | 0 | 2 | 2 | 5 | 5 | 9 | 9 | 13 | 17 |
| invAngle | | | | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | -4096 | - | - | - | - | - | - | - | - | - |

wherein predModeIntra are intra-prediction modes, IntraPredAngle and InvAngle are luma channel intra-prediction angle parameter values, IntraPredAngle (4:2:2 chroma) and InvAngle (4:2:2 chroma) are 4:2:2 chroma format channel intra-prediction angle parameter values adjusted for use in the 4:2:2 chroma format.

2. The method according to claim 1, wherein populating intra-prediction reference samples further comprises selecting an allocated intra-predication mode from the plurality of horizontal intra-prediction modes.

3. The method according to claim 2, wherein each of the plurality of horizontal intra-prediction modes is searched to select the allocated intra-prediction mode.

4. The method according to claim 2, wherein a subset of the plurality of horizontal intra-prediction modes is searched to select the allocated intra-prediction mode.

5. A system for generating intra-predicted samples for a chroma channel of a video bitstream configured for a 4:2:2 chroma format, the system comprising:

a memory for storing data and a computer program;
a processor coupled to the memory for executing said computer program, said computer program comprising instructions for:

selecting intra-prediction reference samples by using values determined from a look-up table comprising values relating to intra-prediction modes ad intra-prediction angle parameters; and
generating intra-predicted samples using the selected intra-prediction reference samples and values determined from the loo-up table;
**characterised in that** the look-up table is populated as follows:

| Horizontal modes | | | | | | | | | | | | | | | | | |
|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | | | |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | | | |

| Vertical modes | | | | | | | | | | | | | | | | | | | | |
|---|---|---|---|---|---|---|---|---|---|---|---|---|---|---|---|---|---|---|---|---|
| predModeIntra | 15 | 16 | 17 | 18 | 19 | 20 | 21 | 22 | 23 | 24 | 25 | 26 | 27 | 28 | 29 | 30 | 31 | 32 | 33 | 34 |
| intraPredAngle | | | | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | -2 | 0 | 2 | 2 | 5 | 5 | 9 | 9 | 13 | 17 |
| invAngle | | | | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | -4096 | - | - | - | - | - | - | - | - | - |

wherein predModeIntra are intra-prediction modes, IntraPredAngle and InvAngle are luma channel intra-prediction angle parameter values, IntraPredAngle (4:2:2 chroma) and InvAngle (4:2:2 chroma) are 4:2:2 chroma format channel intra-prediction angle parameter values adjusted for use in the 4:2:2 chroma format.

6. The system according to claim 5, wherein said computer program further comprises instructions for selecting an allocated intra-predication mode from the plurality of horizontal intra-prediction modes.

7. The system according to claim 6, wherein each of the plurality of horizontal intra-prediction modes is searched to select the allocated intra-prediction mode.

8. The system according to claim 6, wherein a subset of the plurality of horizontal intra-prediction modes is searched to select the allocated intra-prediction mode.

9. An apparatus for generating intra-predicted samples for a chroma channel of a video bitstream configured for a 4:2:2 chroma format, the apparatus comprising:

means for selecting intra-prediction reference samples by using values determined from a look-up table comprising values relating to intra-prediction modes and intra-prediction angle parameters; and
means for generating intra-predicted samples using the selected intra-prediction reference samples and values determined from the look-up table;
**characterised in that** the look-up table is populated as follows:

| Horizontal modes | | | | | | | | | | | | | | | | | |
|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | ░ | ░ | ░ |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | ░ | ░ | ░ |

| Vertical modes | | | | | | | | | | | | | | | | | | | |
|---|---|---|---|---|---|---|---|---|---|---|---|---|---|---|---|---|---|---|---|
| predModeIntra | 15 | 16 | 17 | 18 | 19 | 20 | 21 | 22 | 23 | 24 | 25 | 26 | 27 | 28 | 29 | 30 | 31 | 32 | 33 | 34 |
| intraPredAngle | ░ | ░ | ░ | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | -2 | 0 | 2 | 2 | 5 | 5 | 9 | 9 | 13 | 17 |
| invAngle | ░ | ░ | ░ | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | -4096 | - | - | - | - | - | - | - | - | - |

wherein predModeIntra are intra-prediction modes, IntraPredAngle and InvAngle are luma channel intra-prediction angle parameter values, IntraPredAngle (4:2:2 chroma) and InvAngle (4:2:2 chroma) are 4:2:2 chroma format channel intra-prediction angle parameter values adjusted for use in the 4:2:2 chroma format.

10. The apparatus according to claim 9, wherein said apparatus further comprises means for selecting an allocated intra-predication mode from the plurality of horizontal intra-prediction modes.

11. The apparatus according to claim 10, wherein each of the plurality of horizontal intra-prediction modes is searched to select the allocated intra-prediction mode.

12. The apparatus according to claim 10, wherein a subset of the plurality of horizontal intra-prediction modes is searched to select the allocated intra-prediction mode.

13. A computer readable medium comprising a computer program for generating intra-predicted samples for a chroma channel of a video bitstream configured for a 4:2:2 chroma format, the program comprising:

code for selecting intra-prediction reference samples by using values determined from a look-up table comprising values relating to intra-prediction modes and intra-prediction angle parameters; and
code for generating intra-predicted samples using the selected intra-prediction reference samples and values determined from the look-up table;
**characterised in that** the look-up table is populated as follows:

| Horizontal modes | | | | | | | | | | | | | | | | | |
|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | ▨ | ▨ | ▨ |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | ▨ | ▨ | ▨ |

| Vertical modes | | | | | | | | | | | | | | | | | | | |
|---|---|---|---|---|---|---|---|---|---|---|---|---|---|---|---|---|---|---|---|
| predModeIntra | 15 | 16 | 17 | 18 | 19 | 20 | 21 | 22 | 23 | 24 | 25 | 26 | 27 | 28 | 29 | 30 | 31 | 32 | 33 | 34 |
| intraPredAngle | ▨ | ▨ | ▨ | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | -2 | 0 | 2 | 2 | 5 | 5 | 9 | 9 | 13 | 17 |
| invAngle | ▨ | ▨ | ▨ | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | -4096 | - | - | - | - | - | - | - | - | - |

wherein predModeIntra are intra-prediction modes, IntraPredAngle and InvAngle are luma channel intra-prediction angle parameter values, IntraPredAngle (4:2:2 chroma) and InvAngle (4:2:2 chroma) are 4:2:2 chroma format channel intra-prediction angle parameter values adjusted for use in the 4:2:2 chroma format.

**Patentansprüche**

1. Verfahren zum Erzeugen von intraprädizierten Abtastwerten für einen Chromakanal eines für ein 4:2:2-Chromaformat konfigurierten Videobitstreams, wobei das Verfahren umfasst:

Auswählen von Intraprädiktionsreferenzabtastwerten unter Verwendung von Werten, die aus einer Lookuptabelle bestimmt werden, welche Werte umfasst, die sich auf Intraprädiktionsmodi und Intraprädiktionswinkelparameter beziehen; und
Erzeugen von intraprädizierten Abtastwerten unter Verwendung der ausgewählten Intraprädiktionsreferenzabtastwerte und aus der Lookuptabelle bestimmter Werte; **dadurch gekennzeichnet, dass** die Lookuptabelle wie folgt besetzt ist:

| Horizontal modes | | | | | | | | | | | | | | | | | |
|---|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | ▨ | ▨ | ▨ |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | ▨ | ▨ | ▨ |

| Vertical modes | | | | | | | | | | | | | | | | | | | |
|---|---|---|---|---|---|---|---|---|---|---|---|---|---|---|---|---|---|---|---|---|
| predModeIntra | 15 | 16 | 17 | 18 | 19 | 20 | 21 | 22 | 23 | 24 | 25 | 26 | 27 | 28 | 29 | 30 | 31 | 32 | 33 | 34 |
| intraPredAngle | ▨ | ▨ | ▨ | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | -2 | 0 | 2 | 2 | 5 | 5 | 9 | 9 | 13 | 17 |
| invAngle | ▨ | ▨ | ▨ | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | -4096 | - | - | - | - | - | - | - | - | - |

wobei predModeIntra Intraprädiktionsmodi sind, IntraPredAngle und InvAngle Lumakanal-Intraprädiktionswinkelparameterwerte sind, und IntraPredAngle (4:2:2 Chroma) und InvAngle (4:2:2 Chroma) Intraprädiktionswinkelparameterwerte im 4:2:2-Chromaformatkanal sind, die zur Verwendung im 4:2:2-Chromaformat angepasst sind.

2. Verfahren nach Anspruch 1, wobei das Besetzen von Intraprädiktionsreferenzabtastwerten ferner Auswählen eines zugeordneten Intraprädiktionsmodus aus den mehreren horizontalen Intraprädiktionsmodi umfasst.

3. Verfahren nach Anspruch 2, wobei jeder der mehreren horizontalen Intraprädiktionsmodi durchsucht wird, um den zugewiesenen Intraprädiktionsmodus auszuwählen.

4. Verfahren nach Anspruch 2, wobei eine Teilmenge der mehreren horizontalen Intraprädiktionsmodi durchsucht wird, um den zugewiesenen Intraprädiktionsmodus auszuwählen.

5. System zum Erzeugen von intraprädizierten Abtastwerten für einen Chromakanal eines für ein 4:2:2-Chromaformat konfigurierten Videobitstreams, wobei das System umfasst:

einen Speicher zum Speichern von Daten und ein Computerprogramm;
einen an den Speicher gekoppelten Prozessor zum Ausführen des Computerprogramms, wobei das Computerprogramm Anweisungen umfasst zum:

Auswählen von Intraprädiktionsreferenzabtastwerten unter Verwendung von Werten, die aus einer Lookuptabelle bestimmt werden, welche Werte umfasst, die sich auf Intraprädiktionsmodi und Intraprädiktionswinkelparameter beziehen; und
Erzeugen von intraprädizierten Abtastwerten unter Verwendung der ausgewählten Intraprädiktionsreferenzabtastwerte und aus der Lookuptabelle bestimmter Werte; **dadurch gekennzeichnet, dass** die Lookuptabelle wie folgt besetzt ist:

| Horizontal modes | | | | | | | | | | | | | | | | | |
|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | ▨ | ▨ | ▨ |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | ▨ | ▨ | ▨ |

| Vertical modes | | | | | | | | | | | | | | | | | | | |
|---|---|---|---|---|---|---|---|---|---|---|---|---|---|---|---|---|---|---|---|
| predModeIntra | 15 | 16 | 17 | 18 | 19 | 20 | 21 | 22 | 23 | 24 | 25 | 26 | 27 | 28 | 29 | 30 | 31 | 32 | 33 | 34 |
| intraPredAngle | ▨ | ▨ | ▨ | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | -2 | 0 | 2 | 2 | 5 | 5 | 9 | 9 | 13 | 17 |
| invAngle | ▨ | ▨ | ▨ | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | -4096 | - | - | - | - | - | - | - | - | - |

wobei predModeIntra Intraprädiktionsmodi sind, IntraPredAngle und InvAngle Lumakanal-Intraprädiktionswinkelparameterwerte sind, und IntraPredAngle (4:2:2 Chroma) und InvAngle (4:2:2 Chroma) Intraprädiktionswinkelparameterwerte im 4:2:2-Chromaformat sind, die zur Verwendung im 4:2:2-Chromaformat angepasst sind.

6. System nach Anspruch 5, wobei das Computerprogramm ferner Anweisungen zum Auswählen eines zugewiesenen Intraprädiktionsmodus aus den mehreren horizontalen Intraprädiktionsmodi umfasst.

7. System nach Anspruch 6, wobei jeder der mehreren horizontalen Intraprädiktionsmodi durchsucht wird, um den zugewiesenen Intraprädiktionsmodus auszuwählen.

8. System nach Anspruch 6, wobei eine Teilmenge der mehreren horizontalen Intraprädiktionsmodi durchsucht wird, um den zugewiesenen Intraprädiktionsmodus auszuwählen.

9. Vorrichtung zum Erzeugen von intraprädizierten Abtastwerten für einen Chromakanal eines für ein 4:2:2-Chromaformat konfigurierten Videobitstreams, wobei die Vorrichtung umfasst:

   eine Einrichtung zum Auswählen von Intraprädiktionsreferenzabtastwerten unter Verwendung von Werten, die aus einer Lookuptabelle bestimmt werden, welche Werte enthält, die sich auf Intraprädiktionsmodi und Intraprädiktionswinkelparameter beziehen; und
   eine Einrichtung zum Erzeugen von intraprädizierten Abtastwerten unter Verwendung der ausgewählten Intraprädiktionsreferenzabtastwerte und aus der Lookuptabelle bestimmter Werte;
   **dadurch gekennzeichnet, dass** die Lookuptabelle wie folgt besetzt ist:

| Horizontal modes | | | | | | | | | | | | | | | | |
|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | ///// | ///// | ///// |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | ///// | ///// | ///// |

| Vertical modes | | | | | | | | | | | | | | | | | | | |
|---|---|---|---|---|---|---|---|---|---|---|---|---|---|---|---|---|---|---|---|
| predModeIntra | 15 | 16 | 17 | 18 | 19 | 20 | 21 | 22 | 23 | 24 | 25 | 26 | 27 | 28 | 29 | 30 | 31 | 32 | 33 | 34 |
| intraPredAngle | ///// | ///// | ///// | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | -2 | 0 | 2 | 2 | 5 | 5 | 9 | 9 | 13 | 17 |
| invAngle | ///// | ///// | ///// | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | -4096 | - | - | - | - | - | - | - | - | - |

   wobei PredModeIntra Intraprädiktionsmodi sind, IntraPredAngle und InvAngle Lumakanal-Intraprädiktionswinkelparameterwerte sind, und IntraPredAngle (4:2:2 Chroma) und InvAngle (4:2:2 Chroma) Intraprädiktionswinkelparameterwerte im 4:2:2-Chromaformatkanal sind, die zur Verwendung im 4:2:2-Chromaformat angepasst sind.

10. Vorrichtung nach Anspruch 9, wobei die Vorrichtung ferner eine Einrichtung zum Auswählen eines zugewiesenen Intraprädiktionsmodus aus den mehreren horizontalen Intraprädiktionsmodi umfasst.

11. Vorrichtung nach Anspruch 10, wobei jeder der mehreren horizontalen Intraprädiktionsmodi durchsucht wird, um den zugewiesenen Intraprädiktionsmodus auszuwählen.

12. Vorrichtung nach Anspruch 10, wobei eine Teilmenge der mehreren Intraprädiktionsmodi durchsucht wird, um den zugewiesenen Intraprädiktionsmodus auszuwählen.

13. Computerlesbares Medium, das ein Computerprogramm zum Erzeugen von intraprädizierten Abtastwerten für einen Chromakanal eines für ein 4:2:2-Chromaformat konfigurierten Videobitstreams umfasst, wobei das Programm umfasst:

   Code zum Auswählen von Intraprädiktionsreferenzabtastwerten unter Verwendung von Werten, die aus einer Lookuptabelle bestimmt werden, welche Werte enthält, die sich auf Intraprädiktionsmodi und Intraprädiktionswinkelparameter beziehen; und
   Code zum Erzeugen von intraprädizierten Abtastwerten unter Verwendung der ausgewählten Intraprädiktionsreferenzabtastwerte und aus der Lookuptabelle bestimmter Werte;
**dadurch gekennzeichnet, dass** die Lookuptabelle wie folgt besetzt ist:

| Horizontal modes | | | | | | | | | | | | | | | | | |
|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | ░ | ░ | ░ |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | ░ | ░ | ░ |

| Vertical modes | | | | | | | | | | | | | | | | | | | | |
|---|---|---|---|---|---|---|---|---|---|---|---|---|---|---|---|---|---|---|---|---|
| predModeIntra | 15 | 16 | 17 | 18 | 19 | 20 | 21 | 22 | 23 | 24 | 25 | 26 | 27 | 28 | 29 | 30 | 31 | 32 | 33 | 34 |
| intraPredAngle | ░ | ░ | ░ | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | -2 | 0 | 2 | 2 | 5 | 5 | 9 | 9 | 13 | 17 |
| invAngle | ░ | ░ | ░ | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | -4096 | - | - | - | - | - | - | - | - | - |

wobei PredModeIntra Intraprädiktionsmodi sind, IntraPredAngle und InvAngle Lumakanal-Intraprädiktionswinkelparameterwerte sind, und IntraPredAngle (4:2:2 Chroma) und InvAngle (4:2:2 Chroma) Intraprädiktionswinkelparameterwerte im 4:2:2-Chromaformatkanal sind, die zur Verwendung im 4:2:2-Chromaformat angepasst sind.

**Revendications**

1. Procédé de génération d'échantillons ayant fait l'objet d'une intraprédiction pour un canal de chrominance d'un flux de données vidéo configuré pour un format de chrominance 4:2:2, le procédé consistant à :

sélectionner des échantillons de référence d'intraprédiction au moyen de valeurs déterminées à partir d'une table de consultation comprenant des valeurs se rapportant à des modes d'intraprédiction et à des paramètres d'angle d'intraprédiction ; et
générer des échantillons ayant fait l'objet d'une intraprédiction au moyen des échantillons de référence d'intraprédiction sélectionnés et des valeurs déterminées à partir de la table de consultation ;
**caractérisé en ce que** la table de consultation est remplie comme suit :

**Modes horizontaux**

| preModeIntra | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| IntraPredAngle | - | 32 | 26 | 21 | 17 | 13 | 9 | 5 | 2 | 0 | -2 | -5 | -9 | -13 | -17 | -21 | -26 |
| IntraPredAngle (chroma 4:2:2) | - | 32 | 32 | 32 | 32 | 26 | 17 | 9 | 5 | 0 | -5 | -9 | -17 | -26 | | | |
| InvAngle | - | - | - | - | - | - | - | - | - | - | 4096 | 1638 | 910 | 630 | 482 | 390 | -315 |
| InvAngle (chroma 4:2:2) | - | - | - | - | - | - | - | - | - | - | 1638 | -910 | 482 | 315 | | | |

**Modes verticaux**

| preModeIntra | 15 | 16 | 17 | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|---|---|---|
| IntraPredAngle | | | | -32 | -26 | -21 | -17 | -13 | -9 | -5 | -2 | 0 | 2 | 5 | 9 | 13 | 17 | 21 | 26 | 32 |
| IntraPredAngle (chroma 4:2:2) | -32 | -26 | -21 | -17 | -13 | -9 | -9 | -5 | -5 | -2 | -2 | 0 | 2 | 2 | 5 | 5 | 9 | 9 | 13 | 17 |
| InvAngle | | | | 256 | 315 | 390 | 482 | 630 | -910 | 1638 | 4096 | - | - | - | - | - | - | - | - | - |
| InvAngle (chroma 4:2:2) | 256 | 315 | 390 | 482 | 630 | 910 | 910 | 1638 | 1638 | 4096 | 4096 | - | - | - | - | - | - | - | - | - |

dans lequel preModeIntra sont des modes d'intraprédiction, IntraPredAngle et InvAngle sont des valeurs de paramètres d'angle d'intraprédiction de canal de luminance, IntraPredAngle (chroma 4:2:2) et InvAngle (chroma 4:2:2) sont des valeurs de paramètres d'angle d'intraprédiction de canal de format de chrominance 4:2:2 ajustées à des fins d'utilisation dans le format de chrominance 4:2:2.

**2.** Procédé selon la revendication 1, dans lequel le remplissage des échantillons de référence d'intraprédiction consiste en outre à sélectionner un mode d'intraprédiction attribué à partir de la pluralité de modes d'intraprédiction horizontaux.

**3.** Procédé selon la revendication 2, dans lequel chacun de la pluralité de modes d'intraprédiction horizontaux fait l'objet d'une recherche pour sélectionner le mode d'intraprédiction attribué.

**4.** Procédé selon la revendication 2, dans lequel un sous-ensemble de la pluralité de modes d'intraprédiction horizontaux fait l'objet d'une recherche pour sélectionner le mode d'intraprédiction attribué.

**5.** Système de génération d'échantillons ayant fait l'objet d'une intraprédiction pour un canal de chrominance d'un flux de données vidéo configuré pour un format de chrominance 4:2:2, le système comprenant :

une mémoire destinée à mémoriser des données et un programme d'ordinateur ;
un processeur couplé à la mémoire destiné à exécuter ledit programme d'ordinateur, ledit programme d'ordinateur comprenant des instructions pour :

sélectionner des échantillons de référence d'intraprédiction au moyen de valeurs déterminées à partir d'une table de consultation comprenant des valeurs se rapportant à des modes d'intraprédiction et à des paramètres d'angle d'intraprédiction ; et
générer des échantillons ayant fait l'objet d'une intraprédiction au moyen des échantillons de référence d'intraprédiction sélectionnés et des valeurs déterminées à partir de la table de consultation ;

**caractérisé en ce que** la table de consultation est remplie comme suit :

| Modes horizontaux | | | | | | | | | | | | | | | | | |
|---|---|---|---|---|---|---|---|---|---|---|---|---|---|---|---|---|---|
| preModeIntra | 1 | 2 | 3 | 4 | 5 | 6 | 7 | 8 | 9 | 10 | 11 | 12 | 13 | 14 | 15 | 16 | 17 |
| IntraPredAngle | - | 32 | 26 | 21 | 17 | 13 | 9 | 5 | 2 | 0 | -2 | -5 | -9 | -13 | -17 | -21 | -26 |
| IntraPredAngle (chroma 4:2:2) | - | 32 | 32 | 32 | 32 | 26 | 17 | 9 | 5 | 0 | -5 | -9 | -17 | -26 | | | |
| InvAngle | - | - | - | - | - | - | - | - | - | - | -4096 | -1638 | -910 | -630 | -482 | -390 | -315 |
| InvAngle (chroma 4:2:2) | - | - | - | - | - | - | - | - | - | - | -1638 | -910 | -482 | -315 | | | |

| Modes verticaux | | | | | | | | | | | | | | | | | | | |
|---|---|---|---|---|---|---|---|---|---|---|---|---|---|---|---|---|---|---|---|
| preModeIntra | 15 | 16 | 17 | 18 | 19 | 20 | 21 | 22 | 23 | 24 | 25 | 26 | 27 | 28 | 29 | 30 | 31 | 32 | 33 | 34 |
| IntraPredAngle | | | | -32 | -26 | -21 | -17 | -13 | -9 | -5 | -2 | 0 | 2 | 5 | 9 | 13 | 17 | 21 | 26 | 32 |
| IntraPredAngle (chroma 4:2:2) | -32 | -26 | -21 | -17 | -13 | -9 | -9 | -5 | -5 | -2 | -2 | 0 | 2 | 2 | 5 | 5 | 9 | 9 | 13 | 17 |
| InvAngle | | | | -256 | -315 | -390 | -482 | -630 | -910 | -1638 | -4096 | - | - | - | - | - | - | - | - | - |
| InvAngle (chroma 4:2:2) | -256 | -315 | -390 | -482 | -630 | -910 | -910 | -1638 | -1638 | -4096 | -4096 | - | - | - | - | - | - | - | - | - |

dans laquelle preModeIntra sont des modes d'intraprédiction, IntraPredAngle et InvAngle sont des valeurs de paramètres d'angle d'intraprédiction de canal de luminance, IntraPredAngle (chroma 4:2:2) et InvAngle (chroma 4:2:2) sont des valeurs de paramètres d'angle d'intraprédiction de canal de format de chrominance 4:2:2 ajustées à des fins d'utilisation dans le format de chrominance 4:2:2.

6. Système selon la revendication 5, dans lequel ledit programme d'ordinateur comprend en outre des instructions pour sélectionner un mode d'intraprédiction attribué à partir de la pluralité de modes d'intraprédiction horizontaux.

7. Système selon la revendication 6, dans lequel chacun de la pluralité de modes d'intraprédiction horizontaux fait l'objet d'une recherche pour sélectionner le mode d'intraprédiction attribué.

8. Système selon la revendication 6, dans lequel un sous-ensemble de la pluralité de modes d'intraprédiction horizontaux fait l'objet d'une recherche pour sélectionner le mode d'intraprédiction attribué.

9. Appareil destiné à générer des échantillons ayant fait l'objet d'une intraprédiction pour un canal de chrominance d'un flux de données vidéo configuré pour un format de chrominance 4:2:2, l'appareil comprenant :

un moyen permettant de sélectionner des échantillons de référence d'intraprédiction au moyen de valeurs déterminées à partir d'une table de consultation comprenant des valeurs se rapportant à des modes d'intraprédiction et des paramètres d'angle d'intraprédiction ; et
un moyen permettant de générer des échantillons ayant fait l'objet d'une intraprédiction au moyen des échantillons de référence d'intraprédiction sélectionnés et des valeurs déterminées à partir de la table de consultation ; **caractérisé en ce que** la table de consultation est remplie comme suit :

| Modes horizontaux | | | | | | | | | | | | | | | | | |
|---|---|---|---|---|---|---|---|---|---|---|---|---|---|---|---|---|---|
| preModeIntra | 1 | 2 | 3 | 4 | 5 | 6 | 7 | 8 | 9 | 10 | 11 | 12 | 13 | 14 | 15 | 16 | 17 |
| IntraPredAngle | - | 32 | 26 | 21 | 17 | 13 | 9 | 5 | 2 | 0 | -2 | -5 | -9 | -13 | -17 | -21 | -26 |
| IntraPredAngle (chroma 4:2:2) | - | 32 | 32 | 32 | 32 | 26 | 17 | 9 | 5 | 0 | -5 | -9 | -17 | -26 | | | |
| InvAngle | - | - | - | - | - | - | - | - | - | - | 4096 | 1638 | 910 | 630 | 482 | 390 | 315 |
| InvAngle (chroma 4:2:2) | - | - | - | - | - | - | - | - | - | - | -1638 | -910 | -482 | -315 | | | |

| Modes verticaux | | | | | | | | | | | | | | | | | | | | |
|---|---|---|---|---|---|---|---|---|---|---|---|---|---|---|---|---|---|---|---|---|
| preModeIntra | 15 | 16 | 17 | 18 | 19 | 20 | 21 | 22 | 23 | 24 | 25 | 26 | 27 | 28 | 29 | 30 | 31 | 32 | 33 | 34 |
| IntraPredAngle | | | | -32 | -26 | -21 | -17 | -13 | -9 | -5 | -2 | 0 | 2 | 5 | 9 | 13 | 17 | 21 | 26 | 32 |
| IntraPredAngle (chroma 4:2:2) | -32 | -26 | -21 | -17 | -13 | -9 | -9 | -5 | -5 | -2 | -2 | 0 | 2 | 2 | 5 | 5 | 9 | 9 | 13 | 17 |
| InvAngle | | | | 256 | 315 | 390 | 482 | 630 | -910 | 1638 | 4096 | - | - | - | - | - | - | - | - | - |
| InvAngle (chroma 4:2:2) | 256 | 315 | 390 | 482 | 630 | 910 | 910 | 1638 | 1638 | 4096 | 4096 | - | - | - | - | - | - | - | - | - |

dans laquelle preModeIntra sont des modes d'intraprédiction, IntraPredAngle et InvAngle sont des valeurs de paramètres d'angle d'intraprédiction de canal de luminance, IntraPredAngle (chroma 4:2:2) et InvAngle (chroma 4:2:2) sont des valeurs de paramètres d'angle d'intraprédiction de canal de format de chrominance 4:2:2 ajustées à des fins d'utilisation dans le format de chrominance 4:2:2.

10. Appareil selon la revendication 9, où ledit appareil comprend en outre un moyen permettant de sélectionner un mode d'intraprédiction attribué à partir de la pluralité de modes d'intraprédiction horizontaux.

11. Appareil selon la revendication 10, dans lequel chacun de la pluralité de modes d'intraprédiction horizontaux fait l'objet d'une recherche pour sélectionner le mode d'intraprédiction attribué.

12. Appareil selon la revendication 10, dans lequel un sous-ensemble de la pluralité de modes d'intraprédiction horizontaux fait l'objet d'une recherche pour sélectionner le mode d'intraprédiction attribué.

13. Support lisible par ordinateur comprenant un programme d'ordinateur destiné à générer des échantillons ayant fait l'objet d'une intraprédiction pour un canal de chrominance d'un flux de données vidéo configuré pour un format de chrominance 4:2:2, le programme comprenant :

un code permettant de sélectionner des échantillons de référence d'intraprédiction au moyen de valeurs déterminées à partir d'une table de consultation comprenant des valeurs se rapportant à des modes d'intraprédiction et des paramètres d'angle d'intraprédiction ; et
un code permettant de générer des échantillons ayant fait l'objet d'une intraprédiction au moyen des échantillons de référence d'intraprédiction sélectionnés et des valeurs déterminées à partir de la table de consultation ; **caractérisé en ce que** la table de consultation est remplie comme suit :

## Modes horizontaux

| preModeIntra | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| IntraPredAngle | - | 32 | 26 | 21 | 17 | 13 | 9 | 5 | 2 | 0 | -2 | -5 | -9 | -13 | -17 | -21 | -26 |
| IntraPredAngle (chroma 4:2:2) | - | 32 | 32 | 32 | 32 | 26 | 17 | 9 | 5 | 0 | -5 | -9 | -17 | -26 | | | |
| InvAngle | - | - | - | - | - | - | - | - | - | - | -4096 | -1638 | -910 | -630 | -482 | -390 | -315 |
| InvAngle (chroma 4:2:2) | - | - | - | - | - | - | - | - | - | - | -1638 | -910 | -482 | -315 | | | |

## Modes verticaux

| preModeIntra | 15 | 16 | 17 | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|---|---|---|
| IntraPredAngle | | | | -32 | -26 | -21 | -17 | -13 | -9 | -5 | -2 | 0 | 2 | 5 | 9 | 13 | 17 | 21 | 26 | 32 |
| IntraPredAngle (chroma 4:2:2) | -32 | -26 | -21 | -17 | -13 | -9 | -9 | -5 | -5 | -2 | -2 | 0 | 2 | 2 | 5 | 5 | 9 | 9 | 13 | 17 |
| InvAngle | | | | -256 | -315 | -390 | -482 | -630 | -910 | -1638 | -4096 | - | - | - | - | - | - | - | - | - |
| InvAngle (chroma 4:2:2) | -256 | -315 | -390 | -482 | -630 | -910 | -910 | -1638 | -1638 | -4096 | -4096 | - | - | - | - | - | - | - | - | - |

dans laquelle preModeIntra sont des modes d'intraprédiction, IntraPredAngle et InvAngle sont des valeurs de paramètres d'angle d'intraprédiction de canal de luminance, IntraPredAngle (chroma 4:2:2) et InvAngle (chroma 4:2:2) sont des valeurs de paramètres d'angle d'intraprédiction de canal de format de chrominance 4:2:2 ajustées à des fins d'utilisation dans le format de chrominance 4:2:2.

100

| Source device 110 |
| --- |
| Video source 112 |
| ↓ |
| Video encoder 114 |
| ↓ |
| Transmitter 116 |

120

| Destination device 130 |
| --- |
| Display device 136 |
| ↑ |
| Video decoder 134 |
| ↑ |
| Receiver 132 |

# Fig. 1

**Fig. 2A**

**Fig. 2B**

Fig. 3

Fig. 4

EP 2 982 108 B1

```
        X     X     X     X     X     X

        O           O           O

501 ⌒ X     X     X     X     X     X              ↖


        X     X     X     X     X     X                    500

502 ⌒ O           O           O

        X     X     X     X     X     X


        X     X     X     X     X     X

        O           O           O

        X     X     X     X     X     X
```

# Fig. 5A

```
        ⊗     X     ⊗     X     ⊗     X


        ⊗     X     ⊗     X     ⊗     X              ↖


        ⊗     X     ⊗     X     ⊗     X                    510


        ⊗     X     ⊗     X     ⊗     X


        ⊗     X     ⊗     X     ⊗     X


        ⊗     X     ⊗     X     ⊗     X
```

# Fig. 5B

**Fig. 6**

Fig. 7

Fig. 8A

**Fig. 8B**

**Fig. 9A**

**Fig. 9B**

Fig. 10

1130

Start → Select intra-prediction mode · 1102

Determine intra-prediction angle · 1104

Chroma 4:2:2 test · 1105 — FALSE

TRUE

VERTICAL — Intra-prediction direction test · 1106

HORIZONTAL

Halve angle · 1108

Double angle · 1112

Quantise angle · 1110

Quantise angle · 1114

1118 — Adjust angle · TRUE — Angle parameter exceeds maximum test · 1116

FALSE

1122 — Adjust angle and direction · TRUE — Angle parameter below minimum test · 1120

FALSE

1100

Generate reference samples · 1124

Generate intra-predicted samples · 1126

**Fig. 11**

End

| Horizontal modes | | | | | | | | | | | | | | | | | |
|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | -32 | -32 | -32 |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | -256 | -256 | -256 |
| Vertical modes | | | | | | | | | | | | | | | | | |
| predModeIntra | 18 | 19 | 20 | 21 | 22 | 23 | 24 | 25 | 26 | 27 | 28 | 29 | 30 | 31 | 32 | 33 | 34 |
| intraPredAngle | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -17 | -13 | -9 | -9 | -5 | -5 | -2 | 0 | 0 | 0 | 2 | 5 | 5 | 9 | 9 | 13 | 17 |
| invAngle | -256 | -315 | -390 | -482 | -630 | -910 | -1638 | -4096 | - | - | - | - | - | - | - | - | - |
| invAngle (4:2:2 chroma) | -482 | -630 | -910 | -910 | -1638 | -1638 | -4096 | - | - | - | - | - | - | - | - | - | - |

# Fig. 12

**Horizontal modes**

| predModeIntra | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | (hatched) | (hatched) | (hatched) |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | (hatched) | (hatched) | (hatched) |

**Vertical modes**

| predModeIntra | 15 | 16 | 17 | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|---|---|---|
| intraPredAngle | (hatched) | (hatched) | (hatched) | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | 0 | 0 | 0 | 2 | 5 | 5 | 9 | 9 | 13 | 17 |
| invAngle | (hatched) | (hatched) | (hatched) | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | - | - | - | - | - | - | - | - | - | - |

## Fig. 13

| Horizontal modes | | | | | | | | | | | | | | | | | |
|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | -32 | -32 | -32 |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | -256 | -256 | -256 |
| Vertical modes | | | | | | | | | | | | | | | | | |
| predModeIntra | 18 | 19 | 20 | 21 | 22 | 23 | 24 | 25 | 26 | 27 | 28 | 29 | 30 | 31 | 32 | 33 | 34 |
| intraPredAngle | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -17 | -13 | -9 | -9 | -5 | -5 | -2 | 2 | 0 | 2 | 2 | 5 | 5 | 9 | 9 | 13 | 17 |
| invAngle | -256 | -315 | -390 | -482 | -630 | -910 | -1638 | -4096 | - | - | - | - | - | - | - | - | - |
| invAngle (4:2:2 chroma) | -482 | -630 | -910 | -910 | -1638 | -1638 | -4096 | -4096 | - | - | - | - | - | - | - | - | - |

## Fig. 14

| Horizontal modes | | | | | | | | | | | | | | | | | |
|---|---|---|---|---|---|---|---|---|---|---|---|---|---|---|---|---|---|
| predModeIntra | 1 | 2 | 3 | 4 | 5 | 6 | 7 | 8 | 9 | 10 | 11 | 12 | 13 | 14 | 15 | 16 | 17 |
| intraPredAngle | - | 32 | 26 | 21 | 17 | 13 | 9 | 5 | 2 | 0 | -2 | -5 | -9 | -13 | -17 | -21 | -26 |
| intraPredAngle (4:2:2 chroma) | - | 32 | 32 | 32 | 32 | 26 | 17 | 9 | 5 | 0 | -5 | -9 | -17 | -26 | ▨ | ▨ | ▨ |
| invAngle | - | - | - | - | - | - | - | - | - | - | -4096 | -1638 | -910 | -630 | -482 | -390 | -315 |
| invAngle (4:2:2 chroma) | - | - | - | - | - | - | - | - | - | - | -1638 | -910 | -482 | -315 | ▨ | ▨ | ▨ |

| Vertical modes | | | | | | | | | | | | | | | | | | | |
|---|---|---|---|---|---|---|---|---|---|---|---|---|---|---|---|---|---|---|---|
| predModeIntra | 15 | 16 | 17 | 18 | 19 | 20 | 21 | 22 | 23 | 24 | 25 | 26 | 27 | 28 | 29 | 30 | 31 | 32 | 33 | 34 |
| intraPredAngle | ▨ | ▨ | ▨ | -32 | -26 | -21 | -17 | -13 | -9 | -5 | -2 | 0 | 2 | 5 | 9 | 13 | 17 | 21 | 26 | 32 |
| intraPredAngle (4:2:2 chroma) | -32 | -26 | -21 | -17 | -13 | -9 | -9 | -5 | -5 | -2 | -2 | 0 | 2 | 2 | 5 | 5 | 9 | 9 | 13 | 17 |
| invAngle | ▨ | ▨ | ▨ | -256 | -315 | -390 | -482 | -630 | -910 | -1638 | -4096 | - | - | - | - | - | - | - | - | - |
| invAngle (4:2:2 chroma) | -256 | -315 | -390 | -482 | -630 | -910 | -910 | -1638 | -1638 | -4096 | -4096 | - | - | - | - | - | - | - | - | - |

## Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2012176406 A

**Non-patent literature cited in the description**

• **FLYNN D et al.** HEVC Range Extensions Draft 2. *12. JCT-VC Meeting; 103. MPEG Meeting,* 14 January 2013